# EUROPEAN PATENT SPECIFICATION

(11) **EP 3 210 041 B1**
(45) Date of publication and mention of the grant of the patent: **03.07.2019**
(21) Application number: 15825633.9
(22) Date of filing: 22.10.2015
(51) Int. Cl.: G01S 19/33, G01S 19/35

(54) **HIGH- PRECISION GNSS RECEIVER MODULE FOR MODULAR MOBILE DEVICE**
GNSS-EMPFÄNGERMODUL MIT HOHER GENAUIGKEIT FÜR EINE MODULARE MOBILE VORRICHTUNG
MODULE RÉCEPTEUR DE GÉOLOCALISATION ET NAVIGATION PAR SYSTÈME DE SATELLITES HAUTE PRÉCISION POUR DISPOSITIF MOBILE MODULAIRE

(30) Priority: 24.10.2014 PT 10799214
(43) Date of publication of application: 30.08.2017
(73) Proprietor: Deimos Engenharia S.a., 1998-023 Lisboa (PT); Accurision GmbH, 6890 Lustenau (AT)
(72) Inventor: VECCHIONE, Giovanni, P-1998-023 Lisboa (PT); SIMÕES SILVA, João, P-1998-023 Lisboa (PT); ROQUE PERES, Tiago, P-1998-023 Lisboa (PT); FREIRE DA SILVA, Pedro, P-1998-023 Lisboa (PT); FERNANDEZ, Antonio, P-1998-023 Lisboa (PT); PALOMO, José Maria, P-1998-023 Lisboa (PT)
(74) Representative: Hofmann, Ralf U.
(86) International application number: PCT/IB2015/058146
(87) International publication number: WO 2016/063239

(56) References cited:
- US-A1- 2009 207 075
- US-A1- 2011 261 805
- FORTIN M-A ET AL: "Development of a Universal GNSS Tracking Channel", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 259-272, XP056010467,
- WENG CHIN-TANG ET AL: "Integration of A Consumer Single-chip Receiver for Multi-Constellation GNSS", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 September 2012 (2012-09-21), pages 2978-2985, XP056008579,

## Description

### TECHNICAL FIELD

The present invention refers to a high-precision and flexible GNSS receiver module targeted for modular electronic mobile devices (e.g. smartphones) and capable of processing all currently know civil and open service signals of the GPS, Galileo, GLONASS and BeiDou Global Navigation Satellite Systems (GNSS) (as well as others that may be deployed in the future with similar signal characteristics), including the high-accuracy AltBOC modulated signals of Galileo E5 band.

### BACKGROUND

The GNSS satellites continuously transmit navigation signals in different frequencies. These signals contain ranging codes and navigation data to allow the users to compute the travelling time from satellite to receiver and the satellite coordinates.

**GPS** was developed by the U.S. Department of Defense (DoD) and is nominally operated with 24 to 27 satellites. GPS satellites transmit right-hand circularly polarized signals to the earth at two frequencies, designated L1 and L2. The main GPS signal is located in L1, at 1575.42MHz, modulated by two codes: the coarse/acquisition (C/A) code and the precision/secure (P/Y) code, reserved to military and authorized users. The GPS L2 signal (1227.6 MHz) originally included only the precise code and is used to provide a second frequency for ionospheric correction and interference mitigation purposes. Since 2005 two new signals are transmitted: L2C for civilian users and a new military signal (M code) in L1 and L2 to provide better jamming resistance. In 2010 a new frequency link has been activated in L5 at 1176.45 MHz for civilian users.

**GLONASS** is a Russian GNSS based on FCDMA (Frequency Code Division Multiple Access) technique instead of the CDMA (Code Division Multiple Access) used by GPS GALILEO and BeiDou. Each GLONASS Space Vehicle (SV) transmits on fundamental frequencies in two frequency sub-bands (L1 ∼ 1,6 GHz, L2 ∼ 1,25 GHz). GLONASS modernization will add a new third frequency G3 in the ARNS band for the GLONASS-K satellites: this signal will provide a third civil C/A2 and military P2 codes. In the frame of GLONASS modernization the CDMA signals in addition to the legacy FDMA signals will be added.

**Galileo** is Europe's own global navigation satellite system, providing a highly accurate, guaranteed global positioning service under civilian control. It is inter-operable with GPS and will have several services, including the Open Service (OS), accessible to all users. Full completion of the 27-satellite Galileo system (24 operational and three active spares) is expected by 2019. The Galileo navigation signals are transmitted in three frequency bands: E5, E6 and E1. Note that the E5 band can be further divided into the E5a and E5b sub-bands, whose signals can be processed independently, with reduced accuracy but also with reduced receiver complexity. However, when processed as a whole, the signal in E5 (E5a plus E5b) used a modulation called AltBOC, providing a very wide bandwidth suitable for very high-accuracy and multipath rejection. The E5a signal is an OS signal freely accessible to users that includes a data channel and a pilot channel. The ranging codes of the E5a signal are not encrypted and provide high positioning accuracy. The E5b signal includes a data channel and a pilot channel. The data flow of the channel E5b contains also public regulated navigation (encrypted commercial data).

The **BeiDou** Navigation Satellite System (BDS), also known as BeiDou-2, is the Chinese GNSS that will be capable of providing positioning, navigation, and timing services to users on a continuous worldwide basis. The development and deployment of the BDS SV started in 2006 and it is expected to provide global navigation services by 2020. The system will be a constellation of 35 satellites, which include 5 geostationary orbit satellites for backward compatibility with BeiDou-1, and 30 non-geostationary satellites. The ranging signals are based on the CDMA principle and have complex structure typical of Galileo or modernized GPS. Similar to the other GNSS, there will be two levels of positioning service: open and restricted (military). Frequencies are allocated in four bands: E1, E2, E5B, and E6 and overlap with Galileo.

Current mobile handheld devices include GNSS receivers able to decode L1 GPS, GLONASS and BeiDou with accuracy in the order of 5m, for open sky conditions. At present time a high precision solution for modular devices does not yet exist (US20110018759 A1, US20080312826 A1, US20090240428 A1) considering a high precision navigation solution for professional users. Presently, the use of high precision modulation such as the Galileo E5 is intended only for professional users (EP2012488 B1) and the combination of high precision for mass market with mobile hand held devices did not yet occur.

The **Modular Design Concept** (MDC) promotes a new way of building electronic devices by attaching individual third-party components (called blocks) to a main board, allowing the user to create a personalized device. These blocks can be replaced at will, to replace a broken block, to upgrade an existing one, or to expand the functionality of the phone in a specific direction. This concept aims to provide personalization and customization to the user and reduce the electronic waste at the same time. This concept has been introduced by an Israeli company (Modu US8406826 B2) and Wildseed (US 20110230178 A1) but only recently, due to the proposed approach and the extent of its modularity, it has gained interest thanks to Dave Hakkens with the Phoneblocks design. In 2013, Phonebloks and Google/Motorola announced their similar aim for a modular smartphone. Phonebloks website become a forum for enthusiasts to talk about and improve the "Project Ara" concept designed by Google's ATAP (Advanced Technology and Projects group) team. Today hand held devices are only addressing the mass-market and only the professional receivers take advantage of the great possibility linked to new GNSS modulation. A modular and compact GNSS receiver approach would allow reaching a broader user spectrum, taking also advantage of the simple user interface and programming language (e.g. in the case of ARA) used by the host devices. In some cases (Project ARA) an MDK (Modular Development Kit) is present. The use of the MDK can facilitate the creation and the integration of the module in a much complex design.

Several patents have been presented on GNSS receivers implementing **AltBOC** demodulation. In particular Novatel (WO 2007137434 A1) patented a method where a receiver uses a local generated code, which results from the combination of the AltBOC E5 codes, to track the full AltBOC broadcast signal and recover the full signal bandwidth, which results in a sharper transition in the correlation curve and a more accurate pseudorange. Also, a Multipath Mitigation Technique (MMT) is used to further increase the accuracy by more precisely determining the code and carrier phases of a direct path signal based on associated pulse shapes.

Another method for E5 signal processing has been proposed by European Space Agency (WO2006027004 A1). The proposed approach includes different steps comprising: RF-IF conversion stage, band-pass filtering, generating a carrier phase and carrier phase-rotating the sampled signals by said carrier phase, correlation of the rotated sampled signals and generation for each subcarrier (E5a, E5b) pseudo-random binary codes and a subcarrier phase, which are used to correlate the rotated sampled signals. The proposed method also includes an AltBOC code discriminator which explores the AltBOC correlation function characteristics.

In EP 2012488 A1 is proposed a method that demodulates the full E5 AltBOC signal, assuming that the signal can be decomposed into 4 components around two distinct frequencies in two adjacent bands. The proposed approach includes carrier and loop closure using the E5 pilot channels and jointly demodulation of the two data channels.

A GNSS receiver able to track the AltBOC (15, 10), or composite E5a and E5b, codes using hardware has been proposed in WO 2005006011 A1. The proposed architecture uses the pilot signal to track the AltBOC signals and requires a second process for decoding the navigation data. The local complex signal, which is used to despread the incoming signal, is generated by combining the PRN sequences of E5a and E5b signals with complex subcarriers. The AltBOC subcarrier is approximated using sinusoidal subcarriers. A limitation of this approach is linked to the correlation losses: the locally generated subcarriers differ from the ones used by the satellite Galileo, and this implies a degradation of the correlation.

Patent application nr. US 2011/261805 discloses an acquisition and tracking apparatus provided for tracking digitized spread spectrum navigation signals modulated with a spreading code according to any of a set of modulation types, the apparatus comprising a plurality of universal tracking channels, each coupled to an interrupt module.

Patent application nr. US 2009/207075 discloses a method and a system for processing Global Navigation Satellite System (GNSS) signals. A wide-band Radio Frequency filter of a signal processing pathway is used to pass a plurality of signals from a plurality of satellite navigation systems as a combined signal set. The signals are split based upon the respective frequency to facilitate reducing the clock rate used to subsequently process each of the signals.

Scientific papers Fortin, M., et al, "Development of a Universal GNSS Tracking Channel", GNSS 2009 and Weng Chin-Tang, et al, "Integration of A Consumer Single-chip Receiver for Multi-Constellation GNSS", GNSS 2012, are also herein acknowledged as relevant prior art disclosures.

In summary, the mentioned AltBOC patents describe solutions which focus only on AltBOC modulated signals dispreading, and do not enable the possibility of dispreading other signals (such as BPSK and BOC modulated signals). Furthermore, the proposed solution in this patent is characterized by a generic GNSS receiver channel architecture (based on Flexible GNSS Receiver Channels) in the sense that it does not only process the AltBOC signals but can also be scaled-up/down programmatically (i.e. without hardware modifications) as to support the processing of other signals, also enabling a trade-off between precision, resources and power consumption.

**Antennas** are also a critical element of the receiver. Currently there are several mass market L1/E1 antenna models, which are simultaneous very small and low cost. However there is no low cost and compact solution covering GNSS frequencies different from L1. Available multi-frequency accurate antennas are typically large, bulky and expensive external antennas, which target specific markets (such as surveying market).

With the deploying of new GNSS satellites that broadcast Open Service signals in frequencies others than L1/E1 (such as L5/E5), there is a need for low cost and compact GNSS antennas covering those bands suitable for integration with mass-market devices (in order to bring the advantages of the new signals to the general public). Therefore it is expected that in the near-future such antennas will be available. Actually, there is already an on-going miniaturization trend in the geodesic-grade antenna markets, where the manufactures plan to launch new antennas that match the performance of current designs (such as choke ring antennas) while being smaller, lighter, and less expensive.

### SUMMARY

A High Precision and Flexible GNSS Receiver Module which it contains a plurality of Flexible GNSS Receiver Channels - one for each satellite signal component -, each comprising more than one Universal GNSS Receiver Hardware Channel (102), which in turn contains a Code Sequencer (408), suitable for the generation of local primary code samples, secondary code samples and sub-carrier samples, as well as for combining such primary code, secondary code and sub-carrier samples as to produce a single spreading sequence replica, enabling single channel processing of the service signal, wherein at least one of said Universal GNSS Receiver Hardware Channels (102) further contains:
- an Input Selector (401), suitable for selecting an input complex signal;
- a Carrier Phase Selector (403), suitable for the selection between the local carrier phase generated in the same instance of the hardware channel or the local carrier phase generated in a previous hardware channel to be used in the generation of the local complex carrier and to be forwarded to a next hardware channel;
- a Code Phase Selector (407), suitable for the selection between the local code phase generated in the same instance of the hardware channel or the local code phase generated in the previous hardware channel to be used in the generation of the local code and sub-carrier and to be forwarded to the next hardware channel;
- a Code Selector (409), suitable for the selection of the local spreading sequence replica generated in the same instance of the hardware channel or the local spreading sequence replica generated in the previous hardware channel to be later used to generate delayed local spreading sequence replicas and possibly forwarded to the next hardware channel;
- A Code Replica Selector (411), suitable for allowing the local spreading sequence replica that is forwarded to the next hardware channel to be selected between the input of the hardware channel's Delay Line and the output of the hardware channel's Delay Line with the highest delay with respect to its input said previous hardware channel consisting of another hardware channel of said Universal GNSS Receiver Hardware Channels, from which internal signals were forwarded, such internal signals comprising local carrier phase, local code phase and local spreading sequence replica.

Said at least one Universal GNSS Receiver Hardware Channel (102) may, in a specific configuration, combinable with the previous configurations, further contain:
- a Carrier Numerically Controlled Oscillator (NCO) (402), suitable for the generation of local carrier phase for a given hardware channel;
- a Complex Carrier Look-Up Table (LUT) (404), suitable for the output of values of the local complex carrier - sine and cosine values - based on the input local carrier phase, coming from the current or previous hardware channel;
- a Complex Mixer (405), suitable for multiplying the selected input signal with the local carrier replica output by the Complex Carrier LUT, thus implementing what can be designated by Carrier Stripping;
- a Code NCO (406), suitable for generating phases for the local primary and secondary code replicas as well as the local sub-carrier replica;
- a Delay Line (410), suitable for generating multiple local code replicas - nominally 5: the Very Early (VE), Early (E), Prompt or Punctual (P), Late (L) and Very Late (VL) - each delayed with respect to the incoming local code by a programmable number of clock cycles;
- a plurality of complex Multipliers (412), each associated with each output of the Delay Line (410), suitable for performing the multiplication between the previously carrier stripped I and Q - complex - signal components from the Complex Mixer (405) and the local spreading sequence replicas generated by the Delay Line (410), thus implementing what can be designated by Signal Dispreading, or Code Stripping;
- a plurality of Complex Integrators (413), each associated with each output of the Delay Line (410), suitable for performing the accumulation of the output of the Multipliers (412) during the coherent integration period, thus completing the correlation between the incoming signal and the local code and carrier replicas.

In this description, a High Precision GNSS Receiver Module able to be interfaced with hand-held devices developed using a Modular Design Concept (MDC) allows improving the performances and the field of applications of GNSS receivers for mass market devices.

The present invention also includes a method of operation of the High Precision and Flexible GNSS Receiver Module in its previously defined configurations, which, in order to enable single channel processing of the service signal, includes the following operations:
- local primary code samples, secondary code samples and local sub-carrier samples based on a local code are generated;
- both code and sub-carrier samples are combined to produce a single spreading sequence replica;
- the previous two steps are implemented by a Code Sequencer (408).

The RM is able to process several GNSS signals using a Flexible GNSS Receiver Channel (FGRC), adapting the performances to the user needs, in a trade-off between accuracy, resources and power consumption. The ability to process signals such as BPSK, BOC and AltBOC signals provides the flexibility to reconfigure on the fly the RM to energy saving modes, where single frequency BPSK and BOC signals are used, or to high performance modes, where multi frequency complex signals (such as E5 AltBOC) are used. The RM will include an IHPA, fundamental to take advantage of the high performance modes, where high accuracy GNSS signals (such as E5 AltBOC signals) are used. The RM with the possibility of processing signals such as E5 AltBOC signals, enabling drastically performance improvements in terms of accuracy at multipath resistance for hand-held devices, allows the use of GNSS in variety of applications that now are exclusive for the professional market, such as surveying.

The following innovations can be highlighted:
- The use of high-accuracy GNSS signal processing hardware and algorithms, typical of professional receivers, in a mass-market device, namely:
   ∘ The use of an integrated (small footprint) high precision antenna;
   ∘ Support for multi-frequency operation;
   ∘ Support for high-precision GNSS signal processing (such as the Galileo E5 AltBOC signal);
- The high-accuracy GNSS concept applied to modular mobile device architectures, allowing custom HW upgrades and minimizing electronic devices' obsolescence;
- The use of a flexible and scalable architecture enabling a trade-off between precision, resources and power consumption with the same hardware device.

### BRIEF DESCRIPTION OF THE DRAWINGS

Figure 1 depicts the architecture of the preferred embodiment of the invention.
Figure 2 depicts the architecture of the RF Front-End module.
Figure 3 depicts the architecture of the Flexible Input Modules.
Figure 4 depicts the architecture of the Universal GNSS Receiver Hardware Channels (RHC).
Figure 5 depicts a possible embodiment of the combination of RHCs to implement a GNSS receiver channel to process GPS L1 and Galileo E1 CBOC signals using the dual-correlator approach.
Figure 6 depicts a possible embodiment of the combination of RHCs to implement a GNSS receiver channel to process GPS L1 and Galileo E1 CBOC signals using the multi-levelled sub-carrier approach, made possible by the architecture of the RHC described below.
Figure 7 depicts a possible embodiment of the combination of RHCs to implement a GNSS receiver channel to process Galileo E5 AltBOC signals using complex local sub-carrier replicas, enabling to use the full accuracy potential of the Galileo E5 AltBOC signal.
Figure 8 depicts a possible embodiment of the combination of RHCs to implement a GNSS receiver channel to process Galileo E5 AltBOC signals using real local sub-carrier replicas, illustrating a trade-off between resources and accuracy.

### DETAILED DESCRIPTION

The main features of the invention have been described in the Summary section, although other specific configurations should be described in more detail. These specific configurations are combinable with those presented in said Summary section.

More specifically, said Microprocessor and Memory (103) module may be so that:
- is programmed to configure and control the Flexible GNSS Receiver Channels, use their outputs to produce GNSS measurements and compute the user's Position Velocity and Time (PVT);
- contains communication means suitable to communicate with an Host Device (101);
- is further programmed in such a way that it can combine the PVT solution and/or lower-level GNSS measurements produced by the Universal GNSS Receiver Hardware Channels (102) - such as pseudoranges, carrier phases and carrier frequencies - with measurements from other sensors from other available modules installed on said Host Device (101), producing a hybrid PVT solution.

The High Precision and Flexible GNSS Receiver Module may, in a configuration combinable with the previous, contain a Radio Frequency Front-End (RF FE) module (104), suitable for the processing of RF signals in the 1164-1610 MHz band, which in turn contains:
- a Programmable Frequency Synthesizer (204), programmable via the Microprocessor and Memory modules (103);
- Multiple RF Channels (203), one for each different frequency, as to allow multi-frequency operation, each including at least:
   - a Programmable Filter (212), suitable for selecting the desired GNSS signal band and rejecting out-of-band signals and interference;
   - a Programmable Gain Amplifier (PGA) and Automatic Gain Control (AGC) module (213), suitable for automatically controlling the amplitude of the Programmable Filter's (212) output signal, ensuring optimal bit loading after the analog-to-digital conversion;
   - a multi-bit Analog-to-Digital Converter (214), suitable for digitizing the output of the Programmable Gain Amplifier and Automatic Gain Control module (213).

The High Precision and Flexible GNSS Receiver Module may, in another configuration combinable with the previous, contain at least one Flexible Input Module (FIM) (108) - one for each operation band -, which are connected to the digital signal output of the RF Front End and comprise:
- a Down-Converter (301), suitable for the down conversion of the IF signals output by the RF Front-End to baseband, if required for the concerned signal, and which is bypassed, if not required for the concerned signal;
- a Configurable Filter (302), suitable for the removal of the high-frequency component generated by the quadrature down-conversion, avoiding aliasing effects after subsequent down-sampling;
- a Configurable Down-Sampler (303), suitable for the sampling frequency of the RF FE (104) outputs to be lowered after filtering, in order to reduce the clock frequency of the next signal processing modules.

The High Precision and Flexible GNSS Receiver Module may, in another configuration combinable with the previous, contain an Integrated High Precision Antenna (IHPA) (105), built in the High Precision GNSS Receiver Module itself, suitable for the reception of Radio Frequency (RF) signals in the 1164-1610 MHz band and connected to the RF FE (104) or bypassed to an external antenna (107).

The High Precision and Flexible GNSS Receiver Module may, in another configuration combinable with the previous, contain an Interface with a Modular Mobile Device (106), suitable for supporting the mechanical attachment of the High Precision GNSS Receiver Module to the Host Device's (101) endoskeleton and for the data exchange between the High Precision GNSS Receiver Module and the Host Device - being able to be integrated in mobile/hand-held devices following a modular design concept -, and the Interface with a Modular Mobile Device (106) further includes an electrical interface, suitable for a power supply connection and a Communications Link with the Host Device (101).

The High Precision and Flexible GNSS Receiver Module may, in another configuration combinable with the previous, be so that the combination of said at least one Universal GNSS Receiver Hardware Channel (102) is suitable for the processing of specific GNSS signals and signal combinations, including:
- Binary Phase Shift Keying (BPSK) modulated signals, as the C/A channel of the GPS L1 signal or one of the I or Q channels of the GPS L5 or Galileo E5a or E5b signals - using a single instance of a Universal GNSS Receiver Hardware Channel;
- Quadrature Phase Shift Keying (QPSK) modulated signals, as the GPS L5 signal or the Galileo E5a or E5b signals - using two instances of a Universal GNSS Receiver Hardware Channel;
- Binary Offset Carrier (BOC) modulated signals, as the data channel of the future GPS L1 C signal - using a single instance of a Universal GNSS Receiver Hardware Channel;
- Time-Multiplexed BOC (TMBOC) modulated signals, as the pilot channel of the future GPS L1 C signal - using two instances of a Universal GNSS Receiver Hardware Channel;
- Composite BOC (CBOC) modulated signals, as the B or C channels of the Galileo E1 signal - using a single instance of a Universal GNSS Receiver Hardware Channel;
- simultaneous processing of data and pilot channels, as the B and C channels of the Galileo E1 signal or the I and Q channels of the Galileo E5a or E5b signals - using two instances of a Universal GNSS Receiver Hardware Channel;
- simultaneous processing of the pilot and data channels of an Alternative BOC (AltBOC) modulated signal, as the Galileo E5 signal - using three to eight instances of a Universal GNSS Receiver Hardware Channel;
and the High Precision and Flexible GNSS Receiver Module is suitable for processing at least all the civil and open service GNSS signals of the following systems: GPS, Galileo, GLONASS, BeiDou and QZSS.

In a specific configuration, said Microprocessor and Memory module is programmed to:
- activate or deactivate the High Precision GNSS Receiver Module;
- configure precision, functionality and power consumption of the High Precision GNSS Receiver Module.

In a specific configuration, said Microprocessor and Memory module is further programmed to:
- Accept the provision of Assistance Data (from a Host Device (101)), accelerating the signal acquisition process and improve its sensitivity;
- accept the provision of coarse location and timing from a Host Device (101)), for the initialization of the High Precision GNSS Receiver Module, the acceleration of the acquisition process and the improvement of receiver sensitivity;
- allocate a portion of the resources - memory and/or processor - of the Host Device (101) for use by the High Precision and Flexible GNSS Receiver Module as to increase computational resources and/or as an interface for data exchange.

The previously referred method (see Summary) may, in a specific configuration, further include the following steps:
- selecting an input complex signal;
- selecting between the local carrier phase generated in the same instance of the hardware channel or the local carrier phase generated in the previous hardware channel to be used in the generation of the local complex carrier and to be forwarded to the next hardware channel;

- selecting between the local code phase generated in the same instance of the hardware channel or the local code phase generated in the previous hardware channel to be used in the generation of the local code and sub-carrier and to be forwarded to the next hardware channel;
- selecting the local code generated in the same instance of the hardware channel or the local code generated in the previous hardware channel to be later used to generate delayed code replicas and possibly forwarded to the next hardware channel;
- allowing the local code replica that is forwarded to the next hardware channel to be selected between the input of a Delay Line and the output of the Delay Line with the highest delay with respect to its input.

Said method may, in another specific configuration, combinable with the previous, further include the following steps:
- generating local carrier phase for a given hardware channel;
- outputting values of the local complex carrier - sine and cosine values - based on the input local carrier phase, coming from the current or previous hardware channel;
- multiplying the selected input signal with the local carrier replica output by the Complex Carrier LUT, thus implementing what can be designated by Carrier Stripping;
- generating phases for the local primary and secondary code replicas as well as for the local sub-carrier replica;
- generating multiple local code replicas - nominally 5: the Very Early (VE), Early (E), Prompt or Punctual (P), Late (L) and Very Late (VL) - each delayed with respect to the incoming local code by a programmable number of clock cycles;
- performing the multiplication between the previously carrier stripped I and Q - complex - signal components from the Complex Mixer (405) and the local code replicas generated by the Delay Line (410), thus implementing what can be designated by Signal Dispreading, or Code Stripping;
- performing the accumulation of the output of the Multipliers (412) during the coherent integration period, thus completing the correlation between the incoming signal and the local code and carrier replicas.

Said method may, in another specific configuration, combinable with the previous, a dedicated Microprocessor and Memory (103) module be so that:
- configures and controls Flexible GNSS Receiver Channels, uses their outputs to produce GNSS measurements and computes the user's Position Velocity and Time (PVT);
- communicates with an Host Device (101);
- optionally combines the PVT solution and/or lower-level GNSS measurements produced by the High Precision GNSS Receiver Module (102) - such as pseudoranges, carrier phases and carrier frequencies - with measurements from other sensors from other available modules installed on said Host Device (101), producing a hybrid PVT solution.

### PARTICULAR EMBODIMENTS

Embodiments of the invention are described in detail.

In an embodiment, the present invention comprises a High Precision GNSS Receiver Module (HP GNSS RM) suitable for being integrated in mobile/hand-held devices specifically through fitting in its endoskeleton, and suitable for the processing of civil and open service GNSS signals, in which it specifically comprises:
a. a Radio Frequency Front-End module (104), connected to the Integrated High Precision Antenna (105), suitable for the processing of RF signals in the 1164-1610 MHz band and for converting the RF signal into a representation for GNSS signal processing by the Flexible Input Modules (108) and for multi-frequency signal processing;
b. at least one Flexible Input Modules (108), one for each band, suitable for multi-frequency signal conditioning;
c. a plurality of Flexible GNSS Receiver Channels, one for each satellite signal, which comprise one or more Universal GNSS Receiver Hardware Channels (102), suitable for the processing of civil and open service GNSS signals;
d. Dedicated Microprocessor and Memory modules (103), programmed to configure and control said Flexible GNSS Receiver Channels, use their outputs to produce GNSS measurements and compute the user's Position Velocity and Time (PVT), as well as communicating with a Host Device (101);
e. An Interface with the Modular Mobile Device (106), suitable for supporting the mechanical attachment of the High Precision GNSS Receiver Module to a Host Device's (101) endoskeleton and programmed to exchange data between the High Precision GNSS Receiver Module and a Host Device (101).
Said at least one Universal GNSS Receiver Hardware Channel (102) may, more specifically, further comprise a built-in Integrated High Precision Antenna (105), with high phase centre stability and suitable for the reception of Radio Frequency (RF) signals in the 1164-1610 MHz band, or an external antenna (107).

Said at least one Universal GNSS Receiver Hardware Channel (102) may, within a more specific configuration of the present embodiment, combinable with the previous, be so that the Flexible GNSS Receiver Channels are programmed to be configured and monitored by a Host Device (101), by communicating with Microprocessor and a dedicated Memory (103) and being connected to the Interface to the Modular Mobile Device (106), programmed as well to use the PVT solution and/or lower-level GNSS measurements produced by the High Precision GNSS Receiver Module (102), in particular pseudoranges, carrier phases or carrier frequencies for PVT computation and/or integration with external sensors from other external modules.

Said at least one Universal GNSS Receiver Hardware Channel (102) may, within a more specific configuration of the present embodiment, combinable with the previous, be so that the Micro-Processor and Memory (103) modules are programmed to configure sub-modules of the High Precision GNSS Receiver Module, their monitoring and control, navigation data demodulation, and GNSS measurement generation and to configure, initialize, compute PVT and communicate between the High Precision GNSS Receiver Module and a Host Device (101).

Said at least one Universal GNSS Receiver Hardware Channel (102) may, within a more specific configuration of the present embodiment, combinable with the previous, be so that the Radio Frequency Front-End (104) comprises:
a. A Programmable Frequency Synthesizer (204), programmable via the Microprocessor and Memory modules (103);
b. Multiple RF Channels (203), one for each different frequency, as to allow multi-frequency operation, each including at least:
   i. A Programmable Filter (212), suitable for selecting the desired GNSS signal band and rejecting out-of-band signals and interference;
   ii. a Programmable Gain Amplifier (PGA) and Automatic Gain Control (AGC) module (213), suitable for the automatic control the amplitude of the Programmable Filter's (212) output signal;
   iii. a multi-bit Analog-to-Digital Converter (214), suitable for digitizing the output of the Programmable Gain Amplifier and Automatic Gain Control module (213).

Said at least one Universal GNSS Receiver Hardware Channel (102) may, within a more specific configuration of the present embodiment, combinable with the previous, be so that the Flexible Input Modules (108) are programmed to process the digital signal output by the RF Front End (104) and comprise:
- A Configurable Filter (302), configured to enable the removal of the high-frequency component generated by the quadrature down-conversion, avoiding aliasing effects after subsequent down-sampling;
- a Configurable Down-Sampler (303), configured to allow the sampling frequency of the RF FE outputs to be lowered after filtering, in order to reduce the clock frequency of the next signal processing modules;

Said at least one Universal GNSS Receiver Hardware Channel (102) may, within a more specific configuration of the present embodiment, combinable with the previous, be so that the Flexible Input Modules (108) further comprise:
- a Down-Converter (301), suitable for the down conversion of the IF signals output by the RF Front-End to baseband.

Said at least one Universal GNSS Receiver Hardware Channel (102) may, within a more specific configuration of the present embodiment, combinable with the previous, be so that the Flexible GNSS Receiver Channels are each comprised of one or more Universal GNSS Receiver Hardware Channels (102), combinable through configuration to produce a hybrid - software plus hardware - GNSS receiver channel.

Said at least one Universal GNSS Receiver Hardware Channel (102) may, within a more specific configuration of the present embodiment, combinable with the previous, be so that each of the Universal GNSS Receiver Hardware Channels (102) comprises:
- an Input Selector (401), suitable to select the complex signal from one of the Flexible Input Modules;
- a Carrier Numerically Controlled Oscillator (NCO) (402), suitable to generate the local carrier phase for a given hardware channel;
- a Carrier Phase Selector (403), configured to enable the selection between the local carrier phase generated in the same instance of the hardware channel or the local carrier phase generated in the previous hardware channel to be used in the generation of the local complex carrier and to be forwarded to the next hardware channel;
- a Complex Carrier Look-Up Table (LUT) (404), configured to output the values of the local complex carrier - sine and cosine values - based on the input local carrier phase, coming from the current or previous hardware channel;
- a Complex Mixer (405), configured to multiply the selected input signal with the local carrier replica output by the Complex Carrier LUT, thus implementing Carrier Stripping;
- a Code NCO (406), configured to generate phases for the local primary and secondary code replicas as well as the local sub-carrier replica;
- a Code Phase Selector (407), configured to select between the local code phase generated in the same instance of the hardware channel or the local code phase generated in the previous hardware channel to be used in the generation of the local code and sub-carrier and to be forwarded to the next hardware channel;
- a Code Sequencer (408), configured to generate the local primary and secondary code samples as well as the local sub-carrier samples, and to support varied modulations and signal structures, including the Galileo E5 AltBOC modulated signal, and to further combine the code and sub-carrier samples as to produce a single spreading sequence replica;
- a Code Selector (409), configured to select the local code generated in the same instance of the hardware channel or the local code generated in the previous hardware channel to be later used to generate delayed code replicas and possibly forwarded to the next hardware channel;
- a Delay Line (410), configured to generate multiple local code replicas - nominally 5: the Very Early (VE), Early (E), Prompt or Punctual (P), Late (L) and Very Late (VL) - each delayed w.r.t. the incoming local code by a programmable number of clock cycles;
- a Code Replica Selector (411), configured to select the local code replica that is forwarded to the next hardware channel between the input of the Delay Line and the output of the Delay Line with the highest delay w.r.t. its input;
- A plurality of complex Multipliers (412), each associated with each output of the Delay Line (410), configured to perform the multiplication between previously carrier stripped I and Q complex signal components from the Complex Mixer (405) and the local code replicas generated by the Delay Line (410), implementing Signal Dispreading/Code Stripping;
- A plurality of Complex Integrators (413), each associated with each output of the Delay Line (410), configured to perform the accumulation of the output of the Multipliers (412) during the coherent integration period, thus completing the correlation between the incoming signal and the local code and carrier replicas.

Said at least one Universal GNSS Receiver Hardware Channel (102) may, within a more specific configuration of the present embodiment, combinable with the previous, be so that the Universal GNSS Receiver Hardware Channels (102) are configured and/or interconnected to implement different types of GNSS receiver channels to enable the processing of specific GNSS signals and signal combinations, including:
- Binary Phase Shift Keying (BPSK) modulated signals, as the C/A channel of the GPS L1 signal or one of the I or Q channels of the GPS L5 or Galileo E5a or E5b signals using a single instance of a Universal GNSS Receiver Hardware Channel;
- Quadrature Phase Shift Keying (QPSK) modulated signals, as the GPS L5 signal or the Galileo E5a or E5b signals using two instances of a Universal GNSS Receiver Hardware Channel;
- Binary Offset Carrier (BOC) modulated signals, as the data channel of the future GPS L1 C signal using a single instance of a Universal GNSS Receiver Hardware Channel;
- Time-Multiplexed BOC (TMBOC) modulated signals, as the pilot channel of the future GPS L1 C signal using two instances of a Universal GNSS Receiver Hardware Channel;
- Composite BOC (CBOC) modulated signals, as the B or C channels of the Galileo E1 signal using a single instance of a Universal GNSS Receiver Hardware Channel;
- Simultaneous processing of data and pilot channels, as the B and C channels of the Galileo E1 signal or the I and Q channels of the Galileo E5a or E5b signals using two instances of a Universal GNSS Receiver Hardware Channel;
- Simultaneous processing of the pilot and data channels of an Alternative BOC (AltBOC) modulated signal, as the Galileo E5 signal using three to eight instances of a Universal GNSS Receiver Hardware Channel.

Said at least one Universal GNSS Receiver Hardware Channel (102) may, within a more specific configuration of the present embodiment, combinable with the previous, be so that the Interface to the Modular Mobile Device (106) further comprises:
- Means to interface with an endoskeleton, so programmed to transmit the processed data of the module to the endoskeleton according to a specific protocol, and to be used by the Host Device (101) to control the High Precision GNSS Receiver Module of claim 1;
- A mechanical interface suitable to attach the High Precision GNSS Receiver Module to an endoskeleton of the Host Device (101);
- An electrical interface suitable for:
   ∘ providing a power supply;
   ∘ providing a communications Link with the Host Device (101).

Said at least one Universal GNSS Receiver Hardware Channel (102) may, within a more specific configuration of the present embodiment, combinable with the previous, be so that the Communications Link is configured to enable the:
- activation/deactivation of the High Precision GNSS Receiver Module and of its high-level configuration via a control interface;
- provision of Assistance Data obtained by the Host Device (101) via a data link;
- provision of the outputs of the High Precision GNSS Receiver Module to enable the refinement of the PVT solution ;
- provision of coarse location and timing to the High Precision GNSS Receiver Module for its initialization and also for the acceleration of the acquisition process and the improvement of receiver sensitivity;
- assignment of a portion of the memory of a Host Device (101) for use by the High Precision GNSS Receiver Module.

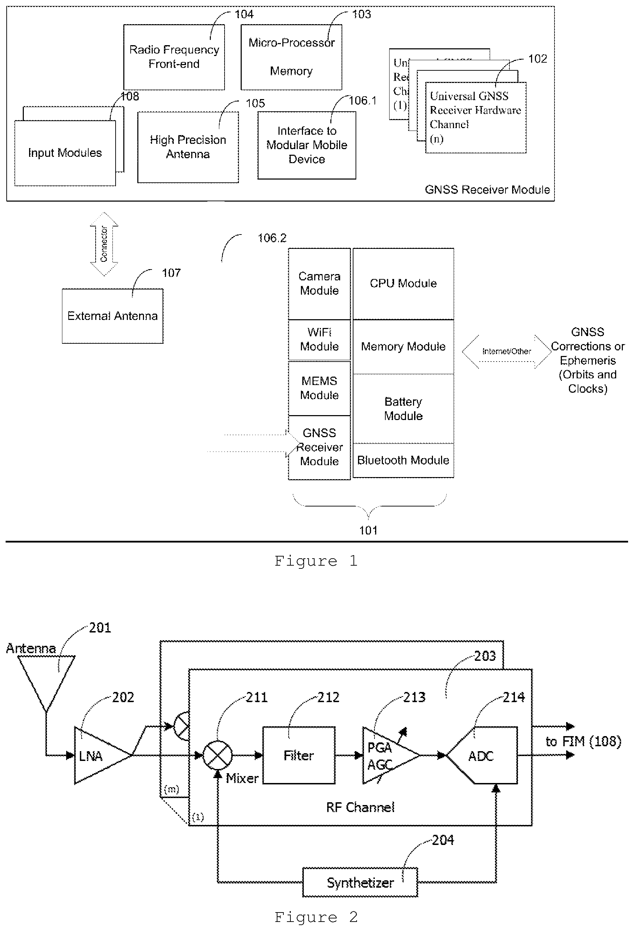

A more specific embodiment is described with the help of the annexed drawings, where Figure 1 depicts the architecture of the preferred embodiment of the invention.

The invention consists of a **High-Precision GNSS Receiver Module,** whose architecture is depicted in Figure 1, targeted for integration in Modular Mobile Devices (MMD), capable of processing all currently known open signals from current and under development GNSSs (e.g. GPS, Galileo, GLONASS, BeiDou), including the Galileo E5 AltBOC modulated signal. It is comprised of: an **Integrated High-Precision Antenna** (105), which can be bypassed with an external antenna; an **RF Front-End** capable of processing all currently known GNSS bands and possibly future GNSS bands (104) and allowing the simultaneous processing of one or more frequency bands, enabling single-frequency or multi-frequency processing; **Flexible Input Modules** (108), allowing the signal conditioning of the **RF Front-End'**s outputs at different Intermediate Frequencies; a set of **Flexible GNSS Receiver Channels,** capable of processing at least the same signals mentioned above and able to be scaled-up/down to trade-off between precision, resources and power consumption, composed of a combination of one or more **Universal GNSS Receiver Hardware Channels** (102); dedicated **Micro-Processor and Memory** (103), in charge of the configuration, monitoring and control of the **Flexible GNSS Receiver Channels** and of the processing of the data generated by them (as navigation algorithm implementation); and an **Interface to the Modular Mobile Device's Endoskeleton** (106), which allows communication with its processor, which in turn may (optionally) also be in charge of some of the processing attributed to the dedicated Micro-Processor, mentioned above (as configuration, monitoring, navigation algorithm implementation, and integration with other sensors included in other modules of the modular mobile device).

A key element of the proposed system is the **Integrated High-Precision Antenna** (105), which enables high precision measurements (due to its phase centre stability and accuracy) with a small footprint and low weight. The **Integrated High-Precision Antenna** is built in the actual **High-Precision GNSS Receiver Module** itself. Nevertheless, the user may also bypass the integrated antenna and use his own external antenna, which may be an advantage for some professional applications.

The **Radio Frequency Front-End** (104), illustrated in Figure 2, is responsible for the reception of Radio Frequency GNSS signals in 1164-1610 MHz band and it consists of: **Low-Noise Amplifier** (LNA) (202), **Programmable Frequency Synthesizer** (204) and one or more **RF Channels** (203).

The **Low-Noise Amplifier** (202) is in charge of the first-stage (low-noise) of signal amplification of the very weak GNSS signals captured by the **Integrated High Precision Antenna** (or an external antenna) and is located as close as possible to the it, in order to reduce signal losses and ensure a low overall noise figure.

The **Programmable Frequency Synthesizer** (204) consists of an ultra-low jitter oscillator, a voltage controlled oscillator and a programmable fractional frequency divider, and generates the clock frequencies for the **ADC** (214) and of the local carrier used by the **Quadrature Mixer** (211).

Each **RF Channel** (203) is responsible for the down-conversion, filtering and digital sampling of the incoming signals for one given frequency/band and therefore there is one **RF Channel** for each frequency to be processed by the **High-Precision GNSS Receiver Module.** Each **RF Channel** is comprised of a **Quadrature Mixer** (211), a **Programmable Filter** (212), a **Programmable Gain Amplifier with Automatic Gain Control** (213), and an **Analog-to-Digital Converter** (ADC) (214).

The **Quadrature Mixer** (211) uses the local carrier generated by the **Programmable Frequency Synthesizer** (204) to down-converts the incoming signal to baseband or very low intermediate frequency. The **Programmable Filter** (212) allows the selection of the desired GNSS signal band and rejects out-of-band signals, noise, and interference. The **Programmable Gain Amplifier with Automatic Gain Control** (213) automatically controls the amplitude of the **Programmable Filter**'s output signal as to maximize ADC efficiency. It features a control loop that that automatically sets the PGA gain to ensure optimal bit loading at the ADC outputs. The **Analog-to-Digital Converter** (214) is responsible for sampling and generating the multi-level digital signal that is sent to the **Flexible Input Modules** (108).

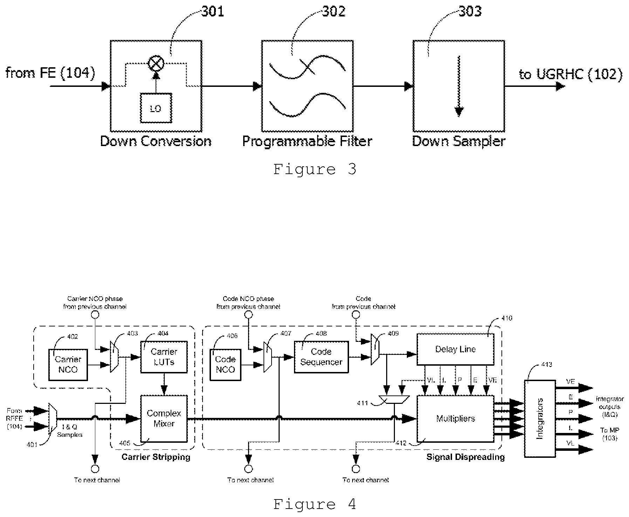

The **High Precision GNSS Receiver Module** includes **Flexible Input Modules** (108), depicted in Figure 3, which are in charge of input signal conditioning in order to adequately condition the **RF Front-End** outputs as to be usable by the **Flexible GNSS Receiver Channels.** Each **Flexible Input Module** is comprised of:
- A **Down-Converter** (301), which, if required, is responsible for the down-conversion to Baseband of the possibly Intermediate Frequency signals output by the RF Front-End;
- A **Configurable Filter** (302), which enables the removal of the high-frequency component generated by the Quadrature down-conversion and further rejects out-of-band signals, noise and interference, avoiding aliasing issues in the (optional) next step;
- A **Configurable Down-Sampler** (303), which allows the sampling frequency of the **RF Front-End** outputs to be (optionally) lowered after the filtering step, in order to reduce the clock frequency of the next signal processing modules (to minimize power consumption).

The **High Precision GNSS Receiver Module** depicted in Figure 1 includes multiple **Flexible GNSS Receiver Channels,** one for each satellite signal being processed by the receiver. Each of these **Flexible GNSS Receiver Channels** is a programmatically defined combination of one or more **Universal GNSS Receiver Hardware Channels** (102), whose architecture is depicted in Figure 4. These **Universal GNSS Receiver Hardware Channels** (102) are designed in such a way as to be generic building blocks for more complex (logical) receiver channels which can be programmatically (i.e. without hardware modifications) connected to each other in different ways as to enable the processing of a wide range of signals including at least all currently known civil and open service signals of the GPS, Galileo, GLONASS and BeiDou systems (including the high-precision Galileo E5 AltBOC modulated signal), thus the designation "Universal".

Each **Universal GNSS Receiver Hardware Channel** (102), illustrated in Figure 4, includes an **Input Selector** (401), which enables the selection of the source of the down-converted signal which will be processed by the hardware channel, i.e. the selection of the **Flexible Input Module** which is the source of the signal being processed by a given hardware channel. This enables the parallel processing (by different hardware channels) of signals with different characteristics (as RF carrier, bandwidth, and sampling frequency), enabling multi-frequency processing and/or the down-scaling of resources for less processing-demanding signals.

Each **Universal GNSS Receiver Hardware Channel** (102) includes additional structures that allow the removal of the incoming signal's residual carrier, after down-conversion by the **RF Front-End** (104) and (optionally) by the **Flexible Input Module** (108), the dispreading of the resulting signal (including primary and secondary codes and sub-carriers, where applicable) and the coherent integration of the resulting signal, thus implementing the correlation between the down-converted signal and locally generated replicas of the residual carrier and spreading sequences. The main functional blocks of each **Universal GNSS Receiver Hardware Channel** (102) are (see Figure 4):
- A **Carrier Numerically Controlled Oscillator** (NCO) (402), which generates the local carrier phase for a given hardware channel;
- A **Complex Carrier Look-Up Table** (LUT) (404), which outputs the values of the local complex carrier replica (sine and cosine values) based on the input local carrier phase;
- A **Complex Mixer** (405), which multiplies the selected input signal with the local complex carrier replica, resulting in the removal (apart from carrier phase and frequency tracking errors) of the residual complex carrier, mostly due to Doppler and receiver clock errors;
- A **Code NCO** (406), which generates phases for the local primary and secondary code replicas as well as, when applicable, the local sub-carrier replica;
- A **Code Sequencer** (408), which generates the local primary and secondary code samples as well as the local sub-carrier samples based on the local code and, when applicable, sub-carrier phases and combines them into a single local spreading sequence replica (possibly non-binary, depending on the signal being processed);
- A **Delay Line** (410), which generates multiple local spreading sequence replicas - nominally 5: the Very Early (VE), Early (E), Prompt or Punctual (P), Late (L) and Very Late (VL) - each delayed w.r.t. the incoming local code by a programmable number of clock cycles. These replicas are required for the closure of the tracking loops and can also be used to parallelize the acquisition process, decreasing the acquisition time;
- **Multipliers** (412), which perform the multiplication between the previously carrier stripped I and Q (complex) signal components (output by the **Complex Mixer**) and the local spreading sequence replicas generated by the **Delay Line,** thus implementing what can be designated by Signal Dispreading, or Code Stripping, which is one of the steps of the correlation operation;
- **Complex Integrators** (413), which perform the accumulation of the output of the Multipliers during the coherent integration period, thus completing the correlation operation between the incoming signal and the local carrier and spreading sequence replicas.

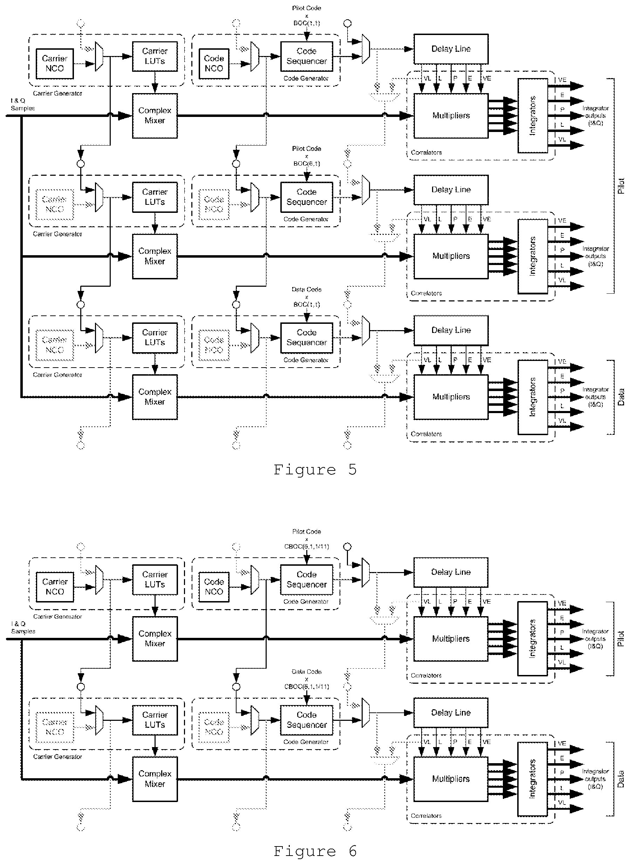

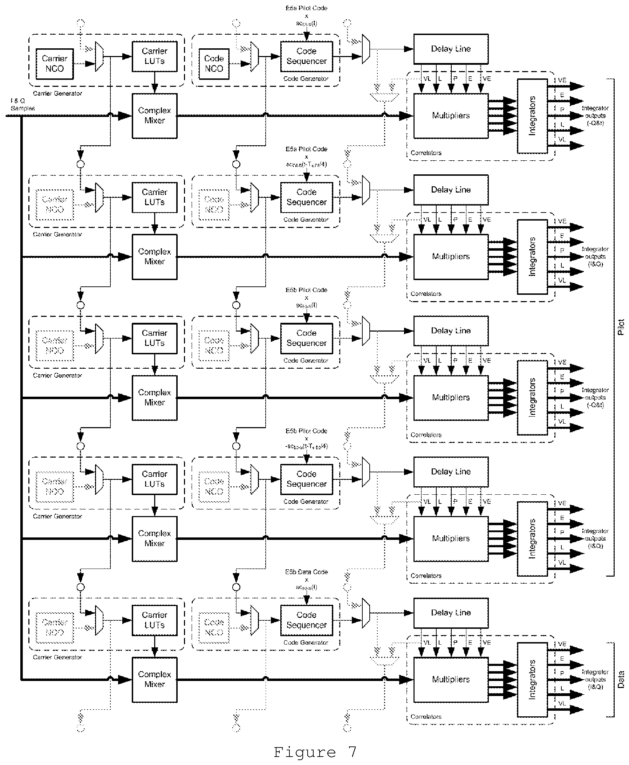

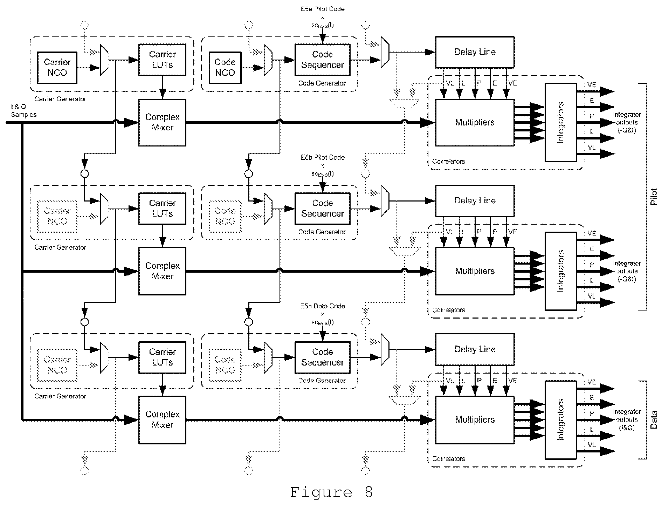

It should be highlighted that each **Universal GNSS Receiver Hardware Channel** (102) supports the generation of a different primary code, secondary code and sub-carrier, thus being eligible to process a single channel (or component) of any of the currently known civil and open service signals of the GPS, Galileo, GLONASS, and BeiDou systems, which have a wide range of primary code/secondary code/sub-carrier combinations. To process a GNSS signal with more than one channel (or component), such as signals with pilot and data channels, several **Universal GNSS Receiver Hardware Channels** (102) are combined via software configuration. For this combination to be possible, the **Universal GNSS Receiver Hardware Channels** (102) feature additional modules which allow the connection between contiguous hardware channels and the forwarding of internal signals from one hardware channel to the next, namely:
- A **Carrier Phase Selector** (403), which enables the use of the local carrier phase generated in a given hardware channel or the local carrier phase generated in a previous hardware channel (being forwarded by the previous hardware channel) in the generation of the local complex carrier by the **Complex Mixer** (405). The selected carrier phase is also forwarded to the next hardware channel as to enable the connection of multiple hardware channels. This process can be designated by carrier phase slaving as there is a (master) channel which generates the local carrier phase used not only by itself but also by subsequent (slave) channels;
- A **Code Phase Selector** (407), which (as for the carrier phase) enables the use of either the local primary and secondary code and sub-carrier phases generated by a given hardware channel or the ones generated in a previous hardware channel (being forwarded by the previous hardware channel) in the generation of the local codes and sub-carrier by the **Code Sequencer** (408). Again, as also for the carrier, the selected code and sub-carrier phases are also forwarded to the next hardware channel as to enable the connection of multiple hardware channels. This process can be designated by code phase slaving as there is a (master) channel which generates the local code and sub-carrier phases used not only by itself but also by subsequent (slave) channels;
- A **Code Selector** (409), which enables the selection of the local spreading sequence that is used by **Delay Line** (410) to generate the local spreading sequence replicas between the local spreading sequence generated in a given hardware channel or a local spreading sequence generated in a previous hardware channel (being forwarded by the previous hardware channel). Slightly differently than what happens for the carrier phase and code and sub-carrier phases, but also to enable the connection of multiple hardware channels, the selected spreading sequence may be either directly or indirectly forwarded to the next hardware channel (as explained further below). This process can be designated by code slaving as there is a (master) channel which generates the local spreading sequence used not only by itself but also by subsequent (slave) channels;
- A **Code Replica Selector** (411), which allows the selection of the local spreading sequence replica that is forwarded to the next hardware channel. The options are the sequence output by the **Code Selector** or the last sequence output by the Delay Line (the one with the largest delay). In the first case, a simple local spreading sequence slaving is achieved, in which the sequence generated by a given hardware channel can be used directly (without any delay) by next hardware channel, while the second case enables an extension of the **Delay Line,** i.e. the input sequence of the **Delay Line** of a given hardware channel is sequence with the largest delay from the **Delay Line** of the previous channel. This enables the generation of **Flexible GNSS Receiver Channels** with longer **Delay Lines** (i.e. with more outputs), which can be useful for advanced tracking loop implementations, multipath mitigation algorithm implementations, auto-correlation function monitoring, semi-open loop tracking, or simply to further parallelize acquisition; Figure 5 and Figure 6 depict two possible embodiments for the combination of **Universal GNSS Receiver Hardware Channels** (102) which implement a composite GNSS receiver channel to process GPS L1 and Galileo E1 CBOC signals using two different approaches (the dual-correlator approach and the multi-levelled sub-carrier approach) each having different resource requirements. Figure 7 and Figure 8 depict a possible embodiment for the combination of **Universal GNSS Receiver Hardware Channels** (102) which implement a composite GNSS receiver channel to process Galileo E5 AltBOC modulated signals using complex and real (respectively) local sub-carrier replicas. The first enables the use of the full accuracy potential of the Galileo E5 AltBOC signal, while the second represents a possible trade-off between precision and resources.

The implementation of the different architectures and processing of the different signals exemplified above using the same hardware is only made possible by the flexible architecture of the **Universal GNSS Receiver Hardware Channel** (102) and by the careful configuration of the slaving options described above.

A dedicated **Micro-Processor** and **Memory Module** (103), shown in Figure 1, is in charge of the configuration of the different configurable modules of the **High-Precision GNSS Receiver Module,** as the **RF Front-End, Flexible Input Modules** and **Flexible GNSS Receiver Channels.** Additionally, it is also in charge of the control of the **Flexible GNSS Receiver Channels,** as to perform signal acquisition and tracking, data demodulation, measurement generation, and navigation.

Some of the functions described above can be shared between the dedicated **Micro-Processor** and **Memory Module** (103) and the processor and memory of the **Host Device** (101), as to enable external configuration and control of the **High-Precision GNSS Receiver Module,** lighten its computational load, enable the implementation of more advanced navigation algorithms and/or enable the integration of measurements from additional sensors included in other modules also hosted by the same **Host Device.**

Additionally, the Host Device can provide, via the **Interface to the Mobile Device's Endoskeleton** (106) assistance data which can be used to accelerate acquisition, improve receiver sensitivity, correct measurements and/or system errors and generally improve positioning performance.

**Interface to the Modular Mobile Device** (106), is compliant with the **Device Host** (101). One of the main advantage of modular devices is linked to the use of a standard interface for all the modules and the endoskeleton. This protocol is established by the endoskeleton manufacturer and any modules to be integrated, as the GNSS Rx module, must be compliant to the standard. In the case of Project ARA, for example, an MDK (module development kit) is provided. Using the protocol specified in the MDK documentation, it is possible to create a Module compatible to the ARA standard. The GNSS module has connectors that can be interfaced with the endoskeleton (according to ARA documentation the pins present the following interfaces on pins - GPIO, I2C, SPI, SDIO, USB, PCI Express).

As an example in the case of ARA, the blocks have a standard dimension and are attached using electro permanent magnets that can be activated or deactivated via software. The connection between the blocks and endoskeleton is capacitive in order to reduce the possibility of damage. The host platform runs using Android. Specific classes are provided by the O.S. and can be used to exchange data between the host and the modules. Other platforms like ZTE Mobius propose similar solutions. The GNSS module will be compliant to the interface proposed by the different standards.

## Claims

1. A High Precision and Flexible GNSS Receiver Module comprising a plurality of Flexible GNSS Receiver Channels, one for each satellite signal, each comprising more than one Universal GNSS Receiver Hardware Channel (102), which in turn contains a Code Sequencer (408), suitable for the generation of local primary code samples, secondary code samples and sub-carrier samples, as well as for combining such primary code, secondary code and sub-carrier samples as to produce a single spreading sequence replica, enabling single channel processing of the service signal, **characterized in that** at least one of said Universal GNSS Receiver Hardware Channels (102) further contains:
- an Input Selector (401), suitable for selecting an input complex signal;
- a Carrier Phase Selector (403), suitable for the selection between the local carrier phase generated in the same instance of the hardware channel or the local carrier phase generated in a previous hardware channel to be used in the generation of the local complex carrier and to be forwarded to a next hardware channel, such previous hardware channel consisting of another hardware channel of said Universal GNSS Receiver Hardware Channels, from which internal signals were forwarded, such internal signals comprising local carrier phase, local code phase and local spreading sequence replica;
- a Code Phase Selector (407), suitable for the selection between the local code phase generated in the same instance of the hardware channel or the local code phase generated in the previous hardware channel to be used in the generation of the local code and sub-carrier and to be forwarded to a next hardware channel;
- a Code Selector (409), suitable for the selection of the local spreading sequence replica generated in the same instance of the hardware channel or the local spreading sequence replica generated in the previous hardware channel to be later used to generate delayed local spreading sequence replicas and possibly forwarded to the next hardware channel;
- A Code Replica Selector (411), suitable for allowing the local spreading sequence replica that is forwarded to the next hardware channel to be selected between the input of the hardware channel's Delay Line and the output of the hardware channel's Delay Line with the highest delay with respect to its input.

2. A High Precision and Flexible GNSS Receiver Module according to the previous claim **characterized in that** said at least one Universal GNSS Receiver Hardware Channel (102) further contains:
- a Carrier Numerically Controlled Oscillator (NCO) (402), suitable for the generation of local carrier phase for a given hardware channel;
- a Complex Carrier Look-Up Table (LUT) (404), suitable for the output of values of the local complex carrier, sine and cosine values, based on the input local carrier phase, coming from the current or previous hardware channel;
- a Complex Mixer (405), suitable for multiplying the selected input signal with the local carrier replica output by the Complex Carrier LUT, thus implementing what can be designated by Carrier Stripping;
- a Code NCO (406), suitable for generating phases for the local primary and secondary code replicas as well as the local sub-carrier replica;
- a Delay Line (410), suitable for generating multiple local code replicas: the Very Early (VE), Early (E), Prompt or Punctual (P), Late (L) and Very Late (VL), each delayed with respect to the incoming local code by a programmable number of clock cycles;
- a plurality of complex Multipliers (412), each associated with each output of the Delay Line (410), suitable for performing the multiplication between the previously carrier stripped I and Q complex signal components from the Complex Mixer (405) and the local spreading sequence replicas generated by the Delay Line (410), thus implementing what can be designated by Signal Dispreading, or Code Stripping;
- a plurality of Complex Integrators (413), each associated with each output of the Delay Line (410), suitable for performing the accumulation of the output of the Multipliers (412) during the coherent integration period, thus completing the correlation between the incoming signal and the local code and carrier replicas.

3. A High Precision and Flexible GNSS Receiver Module according to any of the previous claims **characterized in that** it contains a dedicated Microprocessor and Memory (103) module, which:
- is programmed to configure and control the Flexible GNSS Receiver Channels, use their outputs to produce GNSS measurements and compute the user's Position Velocity and Time (PVT);
- contains communication means suitable to communicate with an Host Device (101);
- is further programmed in such a way that it can combine the PVT solution and/or lower-level GNSS measurements produced by the Universal GNSS Receiver Hardware Channels (102), such as pseudoranges, carrier phases and carrier frequencies, with measurements from other sensors from other available modules installed on said Host Device (101), producing a hybrid PVT solution.

4. A High Precision and Flexible GNSS Receiver Module according to any of the previous claims **characterized in that** it contains a Radio Frequency Front-End (RF FE) module (104), suitable for the processing of RF signals in the 1164-1610 MHz band, which further contains:
- a Programmable Frequency Synthesizer (204), programmable via the Microprocessor and Memory modules (103);
- Multiple RF Channels (203), one for each different frequency, as to allow multi-frequency operation, each including at least:
• a Programmable Filter (212), suitable for selecting the desired GNSS signal band and rejecting out-of-band signals and interference;
• a Programmable Gain Amplifier (PGA) and Automatic Gain Control (AGC) module (213), suitable for automatically controlling the amplitude of the Programmable Filter's (212) output signal, ensuring optimal bit loading after the analog-to-digital conversion;
• a multi-bit Analog-to-Digital Converter (214), suitable for digitizing the output of the Programmable Gain Amplifier and Automatic Gain Control module (213).

5. A High Precision and Flexible GNSS Receiver Module according to any of the previous claims **characterized in that** it contains at least one Flexible Input Module (FIM) (108), one for each operation band, which are connected to the digital signal output of the RF Front End and further comprise:
- a Down-Converter (301), suitable for the down conversion of the IF signals output by the RF Front-End to baseband, if required for the concerned signal, and which is bypassed, if not required for the concerned signal;
- a Configurable Filter (302), suitable for the removal of the high-frequency component generated by the quadrature down-conversion, avoiding aliasing effects after subsequent down-sampling;
- a Configurable Down-Sampler (303), suitable for the sampling frequency of the RF FE (104) outputs to be lowered after filtering, in order to reduce the clock frequency of the next signal processing modules.

6. A High Precision and Flexible GNSS Receiver Module according to any of the previous claims **characterized in that** it contains an Integrated High Precision Antenna (IHPA) (105), built in the High Precision GNSS Receiver Module itself, suitable for the reception of Radio Frequency (RF) signals in the 1164-1610 MHz band and connected to the RF FE (104) or bypassed to an external antenna (107).

7. A High Precision and Flexible GNSS Receiver Module according to any of the previous claims **characterized in that** it contains an Interface with a Modular Mobile Device (106), suitable for supporting the mechanical attachment of the High Precision GNSS Receiver Module to the Host Device's (101) endoskeleton and for the data exchange between the High Precision GNSS Receiver Module and the Host Device, being able to be integrated in mobile/hand-held devices following a modular design concept, and **in that** the Interface with a Modular Mobile Device (106) further includes an electrical interface, suitable for a power supply connection and a Communications Link with the Host Device (101).

8. A High Precision and Flexible GNSS Receiver Module according to any of the previous claims **characterized in that** the combination of said at least one Universal GNSS Receiver Hardware Channel (102) is suitable for the processing of specific GNSS signals and signal combinations, including:
- Binary Phase Shift Keying (BPSK) modulated signals, as the C/A channel of the GPS L1 signal or one of the I or Q channels of the GPS L5 or Galileo E5a or E5b signals, using a single instance of a Universal GNSS Receiver Hardware Channel;
- Quadrature Phase Shift Keying (QPSK) modulated signals, as the GPS L5 signal or the Galileo E5a or E5b signals, using two instances of a Universal GNSS Receiver Hardware Channel;
- Binary Offset Carrier (BOC) modulated signals, as the data channel of the future GPS L1 C signal, using a single instance of a Universal GNSS Receiver Hardware Channel;
- Time-Multiplexed BOC (TMBOC) modulated signals, as the pilot channel of the future GPS L1 C signal, using two instances of a Universal GNSS Receiver Hardware Channel;
- Composite BOC (CBOC) modulated signals, as the B or C channels of the Galileo E1 signal, using a single instance of a Universal GNSS Receiver Hardware Channel;
- simultaneous processing of data and pilot channels, as the B and C channels of the Galileo E1 signal or the I and Q channels of the Galileo E5a or E5b signals, using two instances of a Universal GNSS Receiver Hardware Channel;
- simultaneous processing of the pilot and data channels of an Alternative BOC (AltBOC) modulated signal, as the Galileo E5 signal - using three to eight instances of a Universal GNSS Receiver Hardware Channel; and **in that** the High Precision and Flexible GNSS Receiver Module is suitable for processing at least all the civil and open service GNSS signals of the following systems: GPS, Galileo, GLONASS, BeiDou and QZSS.

9. A High Precision and Flexible GNSS Receiver Module according to any of the previous claims **characterized in that** the Microprocessor and Memory module is programmed to:
- activate or deactivate the High Precision GNSS Receiver Module;
- configure precision, functionality and power consumption of the High Precision GNSS Receiver Module.

10. A High Precision and Flexible GNSS Receiver Module according to any of the previous claims **characterized in that** the Microprocessor and Memory module is further programmed to:
- Accept the provision of Assistance Data (from a Host Device (101)), accelerating the signal acquisition process and improve its sensitivity;
- accept the provision of coarse location and timing from a Host Device (101)), for the initialization of the High Precision GNSS Receiver Module, the acceleration of the acquisition process and the improvement of receiver sensitivity;
- allocate a portion of the resources, such as memory and/or processor, of the Host Device (101) for use by the High Precision and Flexible GNSS Receiver Module as to increase computational resources and/or as an interface for data exchange.

11. Method of operation of the High Precision and Flexible GNSS Receiver Module of any of the previous claims **characterized in that,** in order to enable single channel processing of the service signal, includes the following operations:
- local primary code samples, secondary code samples and local sub-carrier samples based on a local code are generated;
- both code and sub-carrier samples are combined to produce a single spreading sequence replica;
- the previous two steps are implemented by a Code Sequencer (408).

12. Method of operation of the High Precision and Flexible GNSS Receiver Module according to the previous claim **characterized in that** it further includes the following steps:
- selecting an input complex signal;
- selecting between the local carrier phase generated in the same instance of the hardware channel or the local carrier phase generated in the previous hardware channel to be used in the generation of the local complex carrier and to be forwarded to the next hardware channel;
- selecting between the local code phase generated in the same instance of the hardware channel or the local code phase generated in the previous hardware channel to be used in the generation of the local code and sub-carrier and to be forwarded to the next hardware channel;
- selecting the local code generated in the same instance of the hardware channel or the local code generated in the previous hardware channel to be later used to generate delayed code replicas and possibly forwarded to the next hardware channel;
- allowing the local code replica that is forwarded to the next hardware channel to be selected between the input of a Delay Line and the output of the Delay Line with the highest delay with respect to its input.

13. Method of operation of the High Precision and Flexible GNSS Receiver Module according to the previous claim **characterized in that** it further includes the following steps:
- generating local carrier phase for a given hardware channel;
- outputting values of the local complex carrier, sine and cosine values, based on the input local carrier phase, coming from the current or previous hardware channel;
- multiplying the selected input signal with the local carrier replica output by the Complex Carrier LUT, thus implementing what can be designated by Carrier Stripping;
- generating phases for the local primary and secondary code replicas as well as for the local sub-carrier replica;
- generating multiple local code replicas: the Very Early (VE), Early (E), Prompt or Punctual (P), Late (L) and Very Late (VL), each delayed with respect to the incoming local code by a programmable number of clock cycles;
- performing the multiplication between the previously carrier stripped I and Q - complex - signal components from the Complex Mixer (405) and the local code replicas generated by the Delay Line (410), thus implementing what can be designated by Signal Dispreading, or Code Stripping;
- performing the accumulation of the output of the Multipliers (412) during the coherent integration period, thus completing the correlation between the incoming signal and the local code and carrier replicas.

14. Method of operation of the High Precision and Flexible GNSS Receiver Module according to the previous claim **characterized in that** a dedicated Microprocessor and Memory (103) module:
- configures and controls Flexible GNSS Receiver Channels, uses their outputs to produce GNSS measurements and computes the user's Position Velocity and Time (PVT);
- communicates with an Host Device (101);
- optionally combines the PVT solution and/or lower-level GNSS measurements produced by the High Precision GNSS Receiver Module (102), such as pseudoranges, carrier phases and carrier frequencies, with measurements from other sensors from other available modules installed on said Host Device (101), producing a hybrid PVT solution.

## Patentansprüche

1. Hochpräzisions- und Flexibles GNSS-Empfängermodul, umfassend mehrere Flexible GNSS-Empfängerkanäle, einen für jedes Satellitensignal, wobei jeder mehr als einen Universellen GNSS-Empfänger-Hardwarekanal (102) umfasst, der wiederum eine Code-Ablaufsteuerung (408) enthält, die zum Erzeugen von lokalen primären Codemustern, sekundären Codemustern und Sub-Trägermustern sowie zum Kombinieren derartiger primärer Code-, sekundärer Code- und Sub-Trägermuster sowie zum Herstellen einer Einzelverbreitungs-Sequenzreplik geeignet ist, die eine EinzelkanalVerarbeitung des Servicesignals ermöglicht, **dadurch gekennzeichnet, dass** wenigstens einer der Universellen GNSS-Empfänger-Hardwarekanäle (102) zusätzlich enthält:
- einen Eingabewähler (401), der zum Auswählen eines komplexen Eingabesignals geeignet ist;
- eine Träger-Phasenwahl (403), die geeignet ist für die Wahl zwischen der lokalen Träger-Phase, die in derselben Instanz des Hardwarekanals erzeugt ist, oder der lokalen Träger-Phase, die in einem vorherigen Hardwarekanal erzeugt ist, der beim Erzeugen des lokalen komplexen Trägers zu verwenden ist und an einen nächsten Hardwarekanal weiterzuleiten ist, wobei der genannte vorherige Hardwarekanal aus einem anderen Hardwarekanal der genannten Universellen GNSS-Empfänger-Hardwarekanäle besteht, von dem interne Signale weitergeleitet wurden, wobei derartige interne Signale eine lokale Träger-Phase, lokale Code-Phase und lokale Verbreitungs-Sequenzreplik umfassen;
- eine Code-Phasenwahl (407), die geeignet ist für die Wahl zwischen der lokalen Codephase, die in derselben Instanz des Hardwarekanals erzeugt ist, oder der lokalen Codephase, die in dem vorherigen Hardwarekanal erzeugt ist, der beim Erzeugen des lokalen Codes und des Sub-Trägers zu verwenden ist und an einen nächsten Hardwarekanal weiterzuleiten ist;
- eine Code-Wahl (409), die geeignet ist für die Wahl der lokalen Verbreitungs-Sequenzreplik die in derselben Instanz des Hardwarekanals erzeugt ist, oder der lokalen Verbreitungs-Sequenzreplik die in dem vorherigen Hardwarekanal erzeugt ist, um später verwendet zu werden, um verzögerte lokale Verbreitungs-Sequenzrepliken zu erzeugen und möglicherweise an den nächsten Hardwarekanal weitergeleitet zu werden;
- eine Code-Replikwahl (411), die geeignet ist, um der lokalen Verbreitungssequenz-Replik, die an den nächsten Hardwarekanal weitergeleitet ist, zu ermöglichen, zwischen der Eingabe der Verzögerungsleitung des Hardwarekanals und der Ausgabe der Verzögerungsleitung des Hardwarekanals mit der höchsten Verzögerung in Bezug auf seine Eingabe ausgewählt zu sein.

2. Hochpräzisions- und Flexibles GNSS-Empfängermodul nach dem voranstehenden Anspruch, **dadurch gekennzeichnet, dass** wenigstens ein Universeller GNSS Empfänger-Hardwarekanal (102) zusätzlich enthält:
- einen Numerisch Gesteuerten Träger-Oszillator (NCO) (402), der zum Erzeugen einer lokalen Träger-Phase für einen bestimmten Hardwarekanal geeignet ist;
- eine Komplexe Träger-Nachschlagetabelle (LUT) (404), die für die Ausgabe von Werten des lokalen komplexen Trägers, Sinus- und Cosinus-Werten, basierend auf der lokalen Eingabe-Träger-Phase geeignet ist, die von dem aktuellen oder vorherigen Hardwarekanal kommt;
- einen Komplexen Mischer (405), der zum Multiplizieren des ausgewählten Eingabesignals mit der lokalen Träger-Replikausgabe durch den Komplexen Träger LUT geeignet ist und somit umsetzt, was als ein Träger Stripping bezeichnet werden kann;
- einen Code NCO (406), der zum Erzeugen von Phasen für die lokalen primären und sekundären Coderepliken sowie die lokale Sub-Träger-Replik geeignet ist;
- eine Verzögerungsleitung (410), die zum Erzeugen von multiplen lokalen Code-Repliken geeignet ist: die Sehr Frühe (VE), Frühe (E), Prompte oder Punktuelle (P), Späte (L) und Sehr Späte (VL), die jeweils in Bezug auf den eingehenden lokalen Code durch eine programmierbare Anzahl von Taktzyklen verzögert sind;
- mehrere komplexe Multiplikatoren (412), von denen jeder mit jeder Ausgabe der Verzögerungsleitung (410) assoziiert ist, die geeignet sind zum Durchführen der Multiplikation zwischen den zuvor Träger gestrippten I und Q komplexen Signalkomponenten von dem Komplexen Mischer (405) und den lokalen Verbreitungs-Sequenzrepliken, die durch die Verzögerungsleitung (410) erzeugt sind und somit umsetzen, was als Signalverbreitung oder Code Stripping bezeichnet werden kann;
- mehrere Komplex-Integratoren (413), von denen jeder mit jeder Ausgabe der Verzögerungsleitung (410) assoziiert ist, die geeignet sind zum Durchführen der Akkumulation der Ausgabe der Multiplikatoren (412) während der kohärenten Integrationsperiode, und somit die Korrelation zwischen dem eingehenden Signal und dem lokalen Code und den Träger-Repliken vervollständigen.

3. Hochpräzisions- und Flexibles GNSS Empfängermodul nach irgendeinem der voranstehenden Ansprüche, **dadurch gekennzeichnet, dass** es ein dediziertes Mikroprozessor- und Speichermodul (103) enthält, das:
- programmiert ist, um die Flexiblen GNSS Empfänger-Kanäle zu konfigurieren und zu steuern, deren Ausgaben zum Herstellen von GNSS-Messungen zu verwenden und die Position, Geschwindigkeit und Zeit (PVT) des Nutzers zu berechnen;
- Kommunikationsmittel enthält, die geeignet sind, um mit einem Host-Gerät (101) zu kommunizieren;
- weiterhin derart programmiert ist, dass es die PVT-Lösung und / oder die GNSS-Messungen des unteren Niveaus, die durch die Universellen GNSS-Empfänger-Hardwarekanäle (102) hergestellt sind, wie zum Beispiel Pseudoreichweite, Träger-Phasen und Träger-Frequenzen, mit Messungen von anderen Sensoren von anderen verfügbaren Modulen kombinieren kann, welche auf der genannten Host-Vorrichtung (101) installiert sind und eine Hybrid-PVT-Lösung herstellen.

4. Hochpräzisions- und Flexibles GNSS Empfängermodul nach irgendeinem der voranstehenden Ansprüche, **dadurch gekennzeichnet, dass** es ein Funkfrequenz-Front-End-(RF FE)-Modul (104) enthält, das zum Verarbeiten von RF-Signalen in dem 1164-1610 MHz Band geeignet ist, das weiterhin enthält:
- einen Programmierbaren Frequenzgenerator (204), der über die Mikroprozessor- und Speichermodule (103) programmierbar ist;
- Multiple RF-Kanäle (203), einen für jede unterschiedliche Frequenz, um eine Multifrequenz-Operation zu erlauben, von denen jeder wenigstens einschließt:
• einen Programmierbaren Filter (212), der zum Auswählen des gewünschten GNnSS-Signalbandes und zum Aussondern von Signalen außerhalb des Bandes und von Interferenzen geeignet ist;
• ein Programmierbares Verstärker (PGA) und Automatisches Verstärkungssteuerungs (AGC)-Modul (213), das zum automatischen Steuern der Amplitude des Ausgabesignals des Programmierbaren Filters (212) geeignet ist und ein optimales Bitladen nach der analog-zu-digital Umwandlung gewährleistet;
• einen Multibit-analog-zu-digital-Umwandler (214), der zum Digitalisieren der Ausgabe des Programmierbaren Verstärker und Automatischen Verstärkungssteuerungs-Moduls (213) geeignet ist.

5. Hochpräzisions- und Flexibles GNSS Empfängermodul nach irgendeinem der voranstehenden Ansprüche, **dadurch gekennzeichnet, dass** es wenigstens ein Flexibles Eingabemodul (FIM) (108) enthält, eines für jedes Betriebsband, die an die digitale Signalausgabe des RF-Front-Ends angeschlossen sind und weiterhin umfassen:
- einen Down-Converter (301), der zum Umwandeln nach unten der IF-Signalausgabe durch das RF-Front-End zum Basisband geeignet ist, wenn dies für das betroffene Signal erforderlich ist, und der überbrückt ist, wenn es für das betroffene Signal nicht erforderlich ist;
- einen Konfigurierbaren Filter (302), der zum Entfernen der Hochfrequenz-Komponente geeignet ist, die durch das Quadratur-Umwandeln nach unten erzeugt ist und Aliasing-Effekte nach dem anschließenden Downsampling verhindert;
- einen Konfigurierbaren Downsampler (303), der für die Sampling-Frequenz der RF FE (104)-Ausgaben geeignet ist, die nach dem Filtern zu senken sind, um die Taktrate der nächsten Signalverarbeitungs-Module zu reduzieren.

6. Hochpräzisions- und Flexibles GNSS Empfängermodul nach irgendeinem der voranstehenden Ansprüche, **dadurch gekennzeichnet, dass** es eine Integrierte Hochpräzisions-Antenne (IHPA) (105) enthält, die in dem Hochpräzisions- und GNSS Empfängermodul selbst eingebaut ist, und für den Empfang von Funkfrequenz-(RF)-Signalen in dem 1164-1610 MHz Band geeignet und an den RF FE (104) angeschlossen oder zu einer externen Antenne (107) überbrückt ist.

7. Hochpräzisions- und Flexibles GNSS Empfängermodul nach irgendeinem der voranstehenden Ansprüche, **dadurch gekennzeichnet, dass** es eine Schnittstelle mit einer Modularen Mobilen Vorrichtung (106) enthält, die zum Unterstützen der mechanischen Befestigung des Hochpräzisions- GNSS-Empfängermoduls an dem Endoskelett der Host-Vorrichtung (101) und für den Datenaustausch zwischen dem Hochpräzisions- GNSS Empfängermodul und der Host-Vorrichtung geeignet ist und in mobile / tragbare Vorrichtungen gemäß einem modularen Designkonzept integriert werden kann, und dass die Schnittstelle mit einer Modularen Mobilen Vorrichtung (106) zusätzlich eine elektrische Schnittstelle einschließt, die für einen Stromversorgungsanschluss und einen Kommunikationslink mit der Host-Vorrichtung (101) geeignet ist.

8. Hochpräzisions- und Flexibles GNSS Empfängermodul nach irgendeinem der voranstehenden Ansprüche, **dadurch gekennzeichnet, dass** die Kombination des genannten wenigstens einen Universellen GNSS-Empfänger-Hardwarekanals (102) zum Verarbeiten von spezifischen GNSS-Signalen und Signalkombinationen geeignet ist, die einschließen:
- durch Binäre Phasenumtastung (BPSK) modulierte Signale, wie der C/A-Kanal des GPS L1-Signals oder einer der I oder Q-Kanäle der GPS L5 oder Galileo E5a oder E5b-Signale unter Verwenden einer Einzelinstanz eines Universellen GNSS Empfänger-Hardwarekanals;
- durch Quadratur-Phasenumtastung (QPSK) modulierte Signale wie das GPS L5-Signal oder die Galileo E5a- oder E5b-Signale unter Verwenden von zwei Instanzen eines Universellen GNSS-Empfänger-Hardwarekanals;
- durch Binären Offset-Träger (BOC) modulierte Signale, wie den Datenkanal des zukünftigen GPS Ll C-Signals, unter Verwenden einer Einzelinstanz eines Universellen GNSS-Empfänger Hardwarekanals;
- Zeit-Multiplexierte BOC (TMBOC)-modulierte Signale, wie den Pilotkanal des zukünftigen SP L1 C-Signals unter Verwenden von zwei Instanzen eines Universellen GNSS Empfänger-Hardwarekanals;
- Verbund-BOC (CBOC)-modulierte Signale, wie die B- oder C-Kanäle des Galileo-El-Signals, unter Verwenden einer Einzelinstanz eines Universellen GNSS-Empfänger-Hardwarekanals;
- gleichzeitiges Verarbeiten von Daten und Pilotkanälen, wie die B- und C-Kanäle des Galileo-El-Signals oder die I- und Q-Kanäle der Galileo-E5a- oder E5b-Signale, unter Verwenden von zwei Instanzen eines Universellen GNSS Empfänger-Hardwarekanals;
- gleichzeitiges Verarbeiten der Pilot- und Datenkanäle eines Alternativen BOC (AltBOC)-modulierten Signals, wie das Galileo-E5-Signal - unter Verwenden von drei bis acht Instanzen eines Universellen GNSS-Empfänger-Hardwarekanals;
und dass das Hochpräzisions- und Flexible GNSS-Empfängermodul zum Verarbeiten wenigstens aller zivilen und offenen Dienst-GNSS-Signale der folgenden Systeme geeignet ist: GPS, Galileo, GLONASS, BeiDou und QZSS.

9. Hochpräzisions- und Flexibles GNSS Empfängermodul nach irgendeinem der voranstehenden Ansprüche, **dadurch gekennzeichnet, dass** der Mikroprozessor und das Speichermodul programmiert sind, um:
- das Hochpräzisions-GNSS-Empfängermodul zu aktivieren oder zu deaktivieren;
- die Präzision, die Funktionalität und den Stromverbrauch des Hochpräzisions-GNSS-Empfängermoduls zu konfigurieren.

10. Hochpräzisions- und Flexibles GNSS Empfängermodul nach irgendeinem der voranstehenden Ansprüche, **dadurch gekennzeichnet, dass** der Mikroprozessor und das Speichermodul weiterhin programmiert sind, um:
- die Bereitstellung von Assistenzdaten (von einer Host-Vorrichtung (101)) zu akzeptieren, die den Signalerwerbs-Prozess beschleunigen und seine Sensibilität verbessern;
- die Bereitstellung eines groben Standortes und Timings von einer Host-Vorrichtung (101) zum Initialisieren des Hochpräzisions-GNSS-Empfängermoduls, Beschleunigen des Erfassungsprozesses und Verbessern der Empfängersensibilität zu akzeptieren;
- einen Teil der Ressourcen, wie z. B. Speicher und / oder Prozessor, der Host-Vorrichtung (101) für die Verwendung durch das Hochpräzisions- und Flexible GNSS-Empfängermodul zu belegen, um Berechnungsressourcen zu verbessern und / oder als eine Schnittstelle für den Datenaustausch.

11. Verfahren zum Betrieb des Hochpräzisions- und Flexiblen GNSS-Empfängermoduls irgendeines der voranstehenden Ansprüche, **dadurch gekennzeichnet, dass** es die folgenden Operationen einschließt, um eine Einzelkanalverarbeitung des Servicesignals zu ermöglichen:
- lokale primäre Codemuster, sekundäre Codemuster und lokale Sub-Trägermuster basierend auf einem lokalen Code werden erzeugt;
- beide Code- und Sub-Trägermuster werden kombiniert, um eine Einzelverbreitungs-Sequenzreplik herzustellen;
- die vorherigen zwei Schritte werden von einer Code-Ablaufsteuerung (408) durchgeführt.

12. Verfahren zum Betrieb des Hochpräzisions- und Flexiblen GNSS-Empfängermoduls irgendeines der voranstehenden Ansprüche, **dadurch gekennzeichnet, dass** es weiterhin die folgenden Schritte einschließt:
- Auswählen eines komplexen Eingabesignals;
- Auswählen zwischen der lokalen Träger-Phase, die in derselben Instanz des Hardwarekanals erzeugt wurde, oder der lokalen Träger-Phase, die in dem vorherigen Hardwarekanal erzeugt wurde, der beim Erzeugen des lokalen komplexen Trägers zu verwenden ist und an den nächsten Hardwarekanal weiterzuleiten ist;
- Auswählen zwischen der lokalen Code-Phase, die in derselben Instanz des Hardwarekanals erzeugt wurde, oder der lokalen Code-Phase, die in dem vorherigen Hardwarekanal erzeugt wurde, der beim Erzeugen des lokalen Codes und Sub-Trägers zu verwenden ist und an den nächsten Hardwarekanal weiterzuleiten ist;
- Auswählen des lokalen Codes, der in derselben Instanz des Hardwarekanals erzeugt wurde oder des lokalen Codes, der in dem vorherigen Hardwarekanal erzeugt wurde, um später zum Erzeugen von verzögerten Coderepliken verwendet und möglicherweise an den nächsten Hardwarekanal weitergeleitet zu werden;
- Zulassen, dass die lokale Codereplik, die an den nächsten Hardwarekanal weitergeleitet wird, zwischen der Eingabe einer Verzögerungsleitung und der Ausgabe der Verzögerungsleitung mit der höchsten Verzögerung in Bezug auf ihre Eingabe ausgewählt wird.

13. Verfahren zum Betrieb des Hochpräzisions- und Flexiblen GNSS-Empfängermoduls nach dem voranstehenden Anspruch, **dadurch gekennzeichnet, dass** es weiterhin die folgenden Schritte einschließt:
- Erzeugen einer lokalen Träger-Phase für einen bestimmten Hardwarekanal;
- Ausgabe von Werten des lokalen komplexen Trägers, Sinus- und Cosinus-Werten, basierend auf der lokalen Eingabe-Trägerphase, die von dem aktuellen oder vorherigen Hardwarekanal kommt;
- Multiplizieren des ausgewählten Eingabesignals mit der lokalen Träger-Replikausgabe durch den Komplexen Träger LUT und somit Durchführen dessen, was als Träger Stripping bezeichnet werden kann;
- Erzeugen von Phasen für die lokalen primären und sekundären Coderepliken und für die lokale Sub-Trägerreplik;
- Erzeugen von multiplen lokalen Coderepliken: die Sehr Frühe (VE), Frühe (E), Prompte oder Punktuelle (P), Späte (L) und Sehr Späte (VL), die jeweils in Bezug auf den eingehenden lokalen Code durch eine programmierbare Anzahl von Taktzyklen verzögert sind;
- Durchführen der Multiplikation zwischen den zuvor Träger gestrippten I und Q - komplexen Signalkomponenten von dem Komplexen Mischer (405) und den lokalen Coderepliken, die durch die Verzögerungslinie (410) erzeugt wurden, und somit Durchführen, was als Signal-Verbreitung oder Code Stripping bezeichnet werden kann;
- Durchführen der Akkumulation der Ausgabe der Multiplikatoren (412) während des kohärenten Integrationszeitraums, somit Vervollständigen der Korrelation zwischen dem eingehenden Signal und dem lokalen Code und den Träger-Repliken.

14. Verfahren zum Betrieb des Hochpräzisions- und Flexiblen GNSS-Empfängermoduls nach dem voranstehenden Anspruch, **dadurch gekennzeichnet, dass** ein dedizierter Mikroprozessor und ein Speichermodul (103):
- Flexible GNSS-Empfängerkanäle konfiguriert und steuert, deren Ausgaben zur Herstellung von GNSS-Messungen verwendet und die Position, Geschwindigkeit und Zeit (PVT) des Nutzers berechnet;
- mit einer Host-Vorrichtung (101) kommuniziert;
- optional die PVT-Lösung und / oder die GNSS-Messungen des unteren Niveaus, die von dem Hochpräzisions-GNSS-Empfängermodul (102) produziert wurden, wie z. B. Pseudobereiche, Träger-Phasen und Träger-Frequenzen, mit Messungen von anderen Sensoren von anderen verfügbaren Modulen, die auf der genannten Host-Vorrichtung (101) installiert sind, kombiniert, Erzeugung einer Hybrid-PVT-Lösung.

## Revendications

1. Module récepteur GNSS de haute précision et flexible, comprenant une pluralité de canaux de réception GNSS flexibles, un pour chaque signal satellite, chacun comprenant plus d'un canal matériel (102) de récepteur GNSS universel qui contient à son tour un séquenceur de code (408) apte à générer des échantillons de codes primaires locaux, des échantillons de codes secondaires et des échantillons de sous-porteuses, ainsi qu'à combiner ces échantillons de codes primaires, de codes secondaires et de sous-porteuses afin de produire une réplique de séquence d'étalement, permettant un traitement monocanal du signal de service, **caractérisé en ce qu'**au moins l'un des canaux matériels (102) de récepteur GNSS universel contient en outre :
- un sélecteur d'entrée (401), apte à sélectionner un signal d'entrée complexe ;
- un sélecteur de phase de porteuse (403), apte à sélectionner la phase de porteuse locale générée dans la même instance du canal matériel ou la phase de porteuse locale générée dans un canal matériel précédent à utiliser pour générer la porteuse complexe locale et à transmettre au canal matériel suivant, un tel canal matériel précédent consistant en un autre canal matériel desdits canaux matériels de récepteur GNSS universel d'où ont été transmis des signaux internes, tels que des signaux internes comprenant une phase porteuse locale, une phase de code local et une réplique de séquence d'étalement locale ;
- un sélecteur de phase de code (407), apte à sélectionner la phase de code local générée dans la même instance du canal matériel ou la phase de code local générée dans le canal matériel précédent à utiliser pour générer le code local et de la sous-porteuse et à transmettre au canal matériel suivant ;
- un sélecteur de code (409), apte à sélectionner la réplique de séquence d'étalement locale générée dans la même instance du canal matériel ou la réplique de séquence d'étalement locale générée dans le canal matériel précédent à utiliser ultérieurement pour générer des répliques de séquences d'étalement locales retardées et éventuellement à transmettre au canal matériel suivant ;
- un sélecteur de répliques de codes (411), apte à permettre à la réplique de séquence d'étalement locale qui est transmise au canal matériel suivant d'être sélectionnée parmi l'entrée de la ligne de retard du canal matériel et la sortie de la ligne de retard du canal matériel ayant le retard le plus élevé par rapport à son entrée.

2. Module récepteur GNSS de haute précision et flexible selon la revendication précédente, **caractérisé en ce que** ledit au moins un canal matériel (102) de récepteur GNSS universel contient en outre :
- un oscillateur à commande numérique de porteuse (OCN) (402), apte à générer une phase porteuse locale pour un canal matériel donné ;
- une table de correspondance de porteuses complexes (LUT) (404), apte à sortir des valeurs de la porteuse complexe locale, valeurs sinus et cosinus, basées sur la phase de porteuse locale d'entrée et provenant du canal matériel actuel ou précédent ;
- un mélangeur complexe (405), apte à multiplier le signal d'entrée sélectionné avec la sortie de la réplique de porteuse locale par la LUT de porteuses complexes, mettant ainsi en oeuvre ce qui peut être désigné par une suppression de porteuse ;
- un OCN de code (406), apte à générer des phases pour les répliques de codes primaires et secondaires locaux ainsi que pour la réplique de sous-porteuse locale ;
- une ligne de retard (410), apte à générer plusieurs répliques de codes locaux : très tôt (VE), tôt (E), rapide ou ponctuel (P), tardif (L) et très tardif (VL), chacun retardé par rapport au code local entrant par un nombre programmable de cycles d'horloge ;
- une pluralité de multiplicateurs complexes (412), chacun associé à chaque sortie de la ligne de retard (410), aptes à effectuer la multiplication entre les composantes de signal I et Q complexe précédemment dénudées de porteuse provenant du mélangeur complexe (405) et les répliques de séquences d'étalement locales générées par la ligne de retard (410), réalisant ainsi ce qui peut être désigné par un désétalement du signal, ou suppression de code ;
- une pluralité d'intégrateurs complexes (413), chacun associé à chaque sortie de la ligne de retard (410), aptes à effectuer l'accumulation de la sortie des multiplicateurs (412) pendant la période d'intégration cohérente, complétant ainsi la corrélation entre le signal entrant et les répliques de codes locaux et de porteuses.

3. Module récepteur GNSS de haute précision et flexible selon l'une quelconque des revendications précédentes, **caractérisé en ce qu'**il contient un microprocesseur dédié et un module mémoire (103), qui :
- est programmé pour configurer et contrôler les canaux de réception GNSS flexibles, pour utiliser leurs sorties pour produire des mesures GNSS et calculer la position, la vitesse et l'heure (PVT) de l'utilisateur ;
- contient des moyens de communication aptes à communiquer avec un dispositif hôte (101) ;
- est en outre programmé de telle sorte qu'il peut combiner la solution PVT et/ou les mesures GNSS de niveau inférieur produites par les canaux matériels de récepteur GNSS universel (102), tels que des pseudo-distances, des phases porteuses et des fréquences porteuses, avec les mesures d'autres capteurs d'autres modules disponibles installés sur ledit dispositif hôte (101), produisant une solution PVT hybride.

4. Module récepteur GNSS de haute précision et flexible selon l'une quelconque des revendications précédentes, **caractérisé en ce qu'**il contient un module de circuit d'entrée à radio fréquence (RF FE) (104), apte à traiter des signaux RF dans la bande 1 164 -1 610 MHz, qui contient en outre :
- un synthétiseur de fréquence programmable (204), programmable via les modules microprocesseur et mémoire (103) ;
- plusieurs canaux RF (203), un pour chaque fréquence différente, afin de permettre un fonctionnement multi-fréquences, chacun comprenant au moins :
• un filtre programmable (212), apte à sélectionner la bande de signal GNSS souhaitée et à rejeter les signaux hors bande et les interférences ;
• un amplificateur de gain programmable (PGA) et un module de commande automatique de gain (AGC) (213), aptes à commander automatiquement l'amplitude du signal de sortie du filtre programmable (212), assurant une charge binaire optimale après la conversion analogique-numérique ;
• un convertisseur analogique-numérique multi-bit (214), apte à numériser la sortie de l'amplificateur de gain programmable et du module de commande automatique de gain (213).

5. Module récepteur GNSS de haute précision et flexible selon l'une quelconque des revendications précédentes, **caractérisé en ce qu'**il contient au moins un module d'entrée flexible (FIM) (108), un pour chaque bande de fonctionnement, qui sont connectés à la sortie de signal numérique du circuit d'entrée RF et comprennent en outre :
- un convertisseur descendant (301), apte à la conversion descendante des signaux FI émis par le circuit d'entrée RF en bandes de base, si nécessaire pour le signal concerné, et qui est bypassé, si non nécessaire pour le signal concerné ;
- un filtre configurable (302), apte à éliminer la composante haute fréquence générée par la conversion descendante en quadrature, évitant les effets de repliement de spectre après un sous-échantillonnage ultérieur ;
- un sous-échantillonneur configurable (303), adapté à la fréquence d'échantillonnage des sorties du RF FE (104) à abaisser après filtrage, afin de réduire la fréquence d'horloge des modules de traitement de signal suivants.

6. Module récepteur GNSS de haute précision et flexible selon l'une quelconque des revendications précédentes, **caractérisé en ce qu'**il contient une antenne intégrée de haute précision (IHPA) (105), intégrée dans le module récepteur GNSS de haute précision lui-même, apte à recevoir des signaux radiofréquence (RF) dans la bande 1 164-1 610 MHz et connectée au RF FE (104) ou bypassée à une antenne externe (107).

7. Module récepteur GNSS de haute précision et flexible selon l'une quelconque des revendications précédentes, **caractérisé en ce qu'**il contient une interface avec un dispositif mobile modulaire (106), apte à supporter la fixation mécanique du module récepteur GNSS de haute précision à l'endosquelette du dispositif hôte (101) et à échanger des données entre le module récepteur GNSS de haute précision et le dispositif hôte, pouvant être intégré à des dispositifs mobiles/portatifs suivant un concept de conception modulaire, et **en ce que** l'interface avec un dispositif mobile modulaire (106) comprend en outre une interface électrique, appropriée pour une connexion d'alimentation électrique et une liaison de communications avec le dispositif hôte (101).

8. Module récepteur GNSS de haute précision et flexible selon l'une quelconque des revendications précédentes, **caractérisé en ce que** la combinaison dudit au moins un canal matériel de récepteur GNSS universel (102) est apte au traitement de signaux GNSS spécifiques et de combinaisons de signaux, y compris :
- les signaux modulés par modulation par déplacement de phase binaire (BPSK), comme le canal C/A du signal GPS L1 ou l'un des canaux I ou Q des signaux GPS L5 ou Galileo E5a ou E5b, en utilisant une seule instance d'un canal matériel récepteur GNSS universel ;
- les signaux modulés par modulation en quadrature par déplacement de phase (MDPQ), comme le signal GPS L5 ou les signaux Galileo E5a ou E5b, en utilisant deux instances d'un canal matériel récepteur GNSS universel ;
- les signaux modulés par porteuse binaire décalée (BOC), comme le canal de données du futur signal GPS L1 C, en utilisant une seule instance d'un canal matériel de récepteur GNSS universel ;
- les signaux modulés BOC à multiplexage temporel (TMBOC), comme le canal pilote du futur signal GPS L1 C, en utilisant deux instances d'un canal matériel de récepteur GNSS universel ;
- les signaux composites modulés BOC (CBOC), comme les canaux B ou C du signal Galileo E1, en utilisant une seule instance d'un canal matériel de récepteur GNSS universel ;
- le traitement simultané de canaux de données et pilotes, comme les canaux B et C du signal Galileo E1 ou les canaux I et Q des signaux Galileo E5a ou E5b, en utilisant deux instances d'un canal matériel récepteur GNSS universel ;
- le traitement simultané des canaux pilotes et de données d'un signal modulé BOC alternatif (AltBOC), comme le signal Galileo E5 - en utilisant trois à huit instances d'un canal matériel récepteur GNSS universel ;
et **en ce que** le module récepteur GNSS flexible et de haute précision est apte à traiter au moins tous les signaux GNSS civils et de service ouvert des systèmes suivants : GPS, Galileo, GLONASS, BeiDou et QZSS.

9. Module récepteur GNSS de haute précision et flexible selon l'une quelconque des revendications précédentes, **caractérisé en ce que** le module microprocesseur et mémoire est programmé pour :
- activer ou désactiver le module récepteur GNSS de haute précision ;
- configurer la précision, la fonctionnalité et la consommation d'énergie du module récepteur GNSS de haute précision.

10. Module récepteur GNSS de haute précision et flexible selon l'une quelconque des revendications précédentes, **caractérisé en ce que** le module microprocesseur et mémoire est en outre programmé pour :
- accepter la fourniture de données d'assistance (provenant d'un dispositif hôte (101)), ce qui accélère le processus d'acquisition du signal et améliore sa sensibilité ;
- accepter la fourniture d'une localisation et d'une synchronisation approximatives de la part d'un dispositif hôte (101), pour l'initialisation du module récepteur GNSS de haute précision, l'accélération du processus d'acquisition et l'amélioration de la sensibilité du récepteur ;
- allouer une partie des ressources, telles que la mémoire et/ou processeur, du dispositif hôte (101) à utiliser par le module récepteur GNSS flexible et de haute précision pour augmenter les ressources de calcul et/ou comme interface pour l'échange de données.

11. Procédé de fonctionnement du module récepteur GNSS flexible et de haute précision selon l'une quelconque des revendications précédentes, **caractérisé en ce que,** afin de permettre le traitement monocanal du signal de service, il comprend les opérations suivantes :
- générer des échantillons de codes primaires locaux, des échantillons de codes secondaires et des échantillons de sous-porteuses locales basés sur un code local ;
- combiner les deux échantillons de codes et de sous-porteuses pour produire une seule réplique de séquence d'étalement ;
- faire réaliser les deux étapes précédentes par un séquenceur de codes (408).

12. Procédé de fonctionnement du module récepteur GNSS flexible et de haute précision selon la revendication précédente, **caractérisé en ce qu'**il comprend en outre les étapes suivantes :
- sélectionner un signal d'entrée complexe ;
- sélectionner la phase de porteuse locale générée dans la même instance de canal matériel ou la phase de porteuse locale générée dans le canal matériel précédent à utiliser dans la génération de la porteuse locale complexe et à transmettre au canal matériel suivant ;
- sélectionner la phase de code local générée dans la même instance de canal matériel ou la phase de code local générée dans le canal matériel précédent à utiliser pour générer le code local et de la sous-porteuse et à transmettre au canal matériel suivant ;
- sélectionner le code local généré dans la même instance de canal matériel ou le code local généré dans le canal matériel précédent à utiliser ultérieurement pour générer des répliques de codes retardés et éventuellement à transmettre au canal matériel suivant ;
- permettre de sélectionner la réplique du code local qui est transmise au canal matériel suivant entre l'entrée d'une ligne de retard et la sortie de la ligne de retard ayant le retard le plus important par rapport à son entrée.

13. Procédé de fonctionnement du module récepteur GNSS flexible et de haute précision selon la revendication précédente, **caractérisé en ce qu'**il comprend en outre les étapes suivantes :
- générer une phase porteuse locale pour un canal matériel donné ;
- sortir des valeurs de la porteuse locale complexe, sinus et cosinus, basées sur la phase de la porteuse locale d'entrée, provenant du canal matériel actuel ou précédent ;
- multiplier le signal d'entrée sélectionné avec la sortie de la réplique de porteuse locale par la LUT porteuse complexe, mettant ainsi en oeuvre ce qui peut être désigné par suppression de porteuse ;
- générer des phases pour les répliques de codes primaires locaux et secondaires ainsi que pour la réplique de sous-porteuse locale ;
- générer de multiples répliques de codes locaux : très tôt (VE), tôt (E), rapide ou ponctuel (P), tardif (L) et très tardif (VL), chacun retardé par rapport au code local entrant par un nombre programmable de cycles d'horloge;
- effectuer la multiplication entre les composantes de signal I et Q - complexe - précédemment dénudées de la porteuse provenant du mélangeur complexe (405) et les répliques de codes locaux générées par la ligne de retard (410), mettant ainsi en oeuvre ce qui peut être désigné par un désétalement du signal, ou suppression de code ;
- effectuer l'accumulation de la sortie des multiplicateurs (412) pendant la période d'intégration cohérente, complétant ainsi la corrélation entre le signal entrant et le code local et les répliques de porteuses.

14. Procédé de fonctionnement du module récepteur GNSS flexible et de haute précision selon la revendication précédente, **caractérisé en ce qu'**un module microprocesseur dédié et mémoire (103) :
- configure et contrôle les canaux de réception GNSS flexibles, utilise leurs sorties pour produire des mesures GNSS et calcule la position, la vitesse et l'heure (PVT) de l'utilisateur;
- communique avec un dispositif hôte (101) ;
- combine de façon facultative la solution PVT et/ou les mesures GNSS de niveau inférieur produites par le module récepteur GNSS de haute précision (102), telles que des pseudo-distances, des phases porteuses et des fréquences porteuses, avec les mesures d'autres capteurs d'autres modules disponibles installés sur ledit dispositif hôte (101), produisant une solution PVT hybride.
